# EUROPEAN PATENT SPECIFICATION

(11) **EP 3 246 353 B1**
(45) Date of publication and mention of the grant of the patent: **17.03.2021**
(21) Application number: 16180529.6
(22) Date of filing: 21.07.2016
(51) Int. Cl.: C08G 83/00, C08F 20/54, C08F 20/58, C22B 3/00, C22B 15/00, B01J 23/38, B01J 23/46, B01J 23/52, B01J 31/06

(54) **USE OF SURFACTANTS TO EXTRACT A PLATINUM GROUP METAL OR GOLD FROM ORGANIC COMPOSITIONS**
VERWENDUNG VON TENSIDEN ZUR EXTRAKTION VON PLATINGRUPPENMETALL ODER GOLD AUS ORGANISCHEN ZUSAMMENSETZUNGEN
UTILISATION DE TENSIOACTIFS POUR EXTRAIRE DE L'OR OU UN MÉTAL DU GROUPE PLATINE À PARTIR DE COMPOSITIONS ORGANIQUES

(30) Priority: 19.05.2016 WO PCT/IB2016/052952
(43) Date of publication of application: 22.11.2017
(73) Proprietor: Centre National de la Recherche Scientifique, 75016 Paris (FR); Université d'Avignon et des Pays de Vaucluse, 84029 Avignon Cedex 1 (FR); Université de Strasbourg, 67000 Strasbourg (FR); Commissariat à l'Énergie Atomique et aux Énergies Alternatives, 75015 Paris (FR); Ecole Nationale Supérieure de Chimie de Montpellier, 34296 Montpellier Cedex 5 (FR); Université de Montpellier, 34090 Montpellier (FR)
(72) Inventor: Bihel, Frédéric, Jean-Jacques, 67640 Fegersheim (FR); Bourgeois, Damien, 30390 Aramon (FR); Desgranges, Stéphane, 84000 Avignon (FR); Meyer, Daniel, 30150 Saint Genies De Comolas (FR); Contino-Pepin, Christiane, 84210 Althen Des Paluds (FR); Schmitt, Martine, 67000 Strasbourg (FR); Wagner, Patrick,Hervé, Denis, 67170 Brumath (FR)
(74) Representative: Gevers & Orès

(56) References cited:
- WO-A-92/02560
- WO-A1-96/38220
- BARTHELEMY P ET AL: "A New Class of Sulfoxide Surfactants derived from Tris. Synthesis and Preliminary Assessments of their Properties", BIOORGANIC & MEDICINAL CHEMISTRY LETTERS, PERGAMON, AMSTERDAM, NL, vol. 8, no. 12, 16 June 1998 (1998-06-16), pages 1559-1562, XP004137084, ISSN: 0960-894X, DOI: 10.1016/S0960-894X(98)00263-7
- Ange Polidori ET AL: "Synthesis and aggregation behaviour of symmetric glycosylated bolaamphiphiles in water", Armand Lattes ARKIVOC, 9 March 2006 (2006-03-09), pages 73-89, XP055284669, Retrieved from the Internet: URL:http://quod.lib.umich.edu/cgi/p/pod/do d-idx/synthesis-and-aggregation-behaviour- of-symmetric.pdf?c=ark;idno=5550190.0007.4 07 [retrieved on 2016-06-30]
- PHILIPPE BARTHÉLÉMY ET AL: "Synthesis and Preliminary Assessments of Ethyl-Terminated Perfluoroalkyl Nonionic Surfactants Derived from Tris(hydroxymethyl)acrylamidomethane", ORGANIC LETTERS, vol. 1, no. 11, 1 December 1999 (1999-12-01), pages 1689-1692, XP055284667, US ISSN: 1523-7060, DOI: 10.1021/ol990558f

## Description

The present invention is in the field of surfactants to extract a platinum group metal or gold, in particular palladium, from organic compositions. In particular, the invention concerns the use of surfactants to back-extract a platinum group metal or gold, in particular palladium, from organic compositions further comprising an extractant of said platinum group metal or gold, in particular palladium from an aqueous solution.

Palladium (Pd) is a semi-precious metal, the supply of which remains strategic due to the geographic location of deposits and therefore, to the production, which is limited to a few countries (mainly Russia and South Africa). Moreover, tensions exist on the palladium market, due to the end of the inventories held by Russia, which allowed the market to relax, as well as a steady increase in the demand for palladium. In fact, all the metals of the platinum group, including platinum (Pt), palladium and rhodium (Rh) are considered as strategic by the EU and the US, the production of these three metals being closely related.

Gold (Au) is a precious metal which is also strategic, due to its use for investments and in industry.

Platinum group metals and gold, in particular palladium, are metals having interesting catalytic properties, and a good resistance to corrosion.

Hence, platinum, palladium, rhodium and gold are in particular used in the manufacture of catalytic converters for the automotive. The evolution of the palladium demand is in fact largely linked to the growth of the automotive market.

Platinum group metal and gold are also used in the chemical industry, as catalysts.

It is estimated that about one quarter of the amount of palladium consumed annually originates from recycled wastes. This recycling relies exclusively on the recycling of catalytic converters, a homogeneous source of palladium, treated in hydrochloric acid medium. The development of new recycling processes is an upcoming area of economic interest.

The valuation of wastes of electrical and electronic equipment (WEEE) also referred to as *"urban mine"* is a booming thematic, and represents an important potential source of platinum group metals, in particular palladium, and gold.

Whatever its source (mine ore, recycling of converters or wastes, etc...), Pd is separated and refined thanks to classical hydrometallurgy techniques, and different technologies can be used, such as liquid-liquid extraction (or solvent extraction), electrochemistry, selective precipitation, supported liquid membranes or ion exchange resins.

In the case of palladium liquid-liquid extraction, many extractants have been developed and are very effective for selective extraction of the palladium from the acidic aqueous phase to an organic phase, such as malonamides, alkyl sulfides, sulfoxides produced by mono-sulfide oxidation, hydroxyoximes, amines or ammonium salts, phosphorus derivatives such as alkyl phosphine oxides and phosphine sulfides, ketones, thio and dithio-diglycolamides.

Palladium is generally back-extracted from the organic phase into an aqueous phase employing an aqueous solution of HCl or ammonia, then purified by two methods that can be summarized as follows:
- Precipitation of palladium dichlorodiamine in two stages with solubilization of hexachloropalladate by ammonia to give [Pd(NH₃)₄]Cl₂, followed by precipitation in acidic conditions of palladium dichlorodiamine [PdCl₂(NH₃)₂]. The latter is redissolved with an aqueous ammonia solution to form the palladium dichlorotetramine [Pd(NH₃)₄]Cl₂ and precipitated again by acidification. Palladium dichlorotetramine may also be extracted by a dialkylsulfide and then re-extracted with an ammoniac solution. Very pure [PdCl₂(NH₃)₂] is obtained by precipitation at pH 1; or
- Solubilization of hexachloropalladium by N2H4 to give (NH₄)₂[PdCl₄]. (NH₄)₂[PdCl₆] may be obtained by Cl₂ gas treatment and addition of NH₄Cl.

However, these methods involve hazardous chemicals and imply purification extra steps. Hence, these methods of Pd back-extractions are neither environmentally friendly nor cost-effective.

In 2012, the Rio Declaration on Environment and Development has set the challenge to our worldwide society to reach a *"sustainable development"* through the implementation of innovative scientific, technologic and social tools. It is a real challenge for the chemical industry, as one of the most important goals of sustainable development consists in reducing the adverse consequences of the substances that we use and generate. Worldwide demand for environmentally friendly chemical processes requires novel and cost-effective approaches, which will be the pedestal of renewal of our chemical industry. This conceptual revolution is already underway with the growing development of the Green Chemistry.

One of the key area of Green Chemistry is the elimination of solvents in chemical processes or the replacement of hazardous solvents with environmental benign solvents. In 2009, the ACS Green Chemistry Institute (composed by 12 major pharmaceutical companies such as Pfizer, Novartis, and GSK) established that solvents contribute to more than 50% of materials used in manufacture of active pharmaceutical compounds, and consequently, the development of greener solvent alternatives should become a strategic priority for chemical industry. While the environmental implications are clear, there are also economic incentives to get organic solvents out of organic reactions. Up-front costs associated with their purchase, and then expenses earmarked for their proper disposal, are very significant in the global production costs of a chemical compound. Moreover, using organic solvents is also an issue in terms of toxicity and flammability, and has a clear impact on worker safety. Consequently, selecting alternative solvents that will have limited impact on health and environment has become a major issue for our community. Solvent-free alternative is, of course, the best solution, but most of the organic reactions require a solvent. Ionic liquids, supercritical media and other nonconventional media have been described as efficient alternatives to conventional organic solvents, but using water as alternative solvent appears to be a very attractive approach.

Although some chemical reactions were successfully developed in water, in general manner, the poor solubility of organic reagents and catalysts was described as a strong limitation to this approach. To circumvent the solubility issue, some surfactants were used in water to form hydrophobic nanoreactors. Indeed, thanks to their amphiphilic nature, surfactants in water undergo spontaneous self-assembly into micellar form. Each micelle represents a nanoreactor with a lipophilic core that will function as reaction vessel in which the organic transformation involving water-insoluble reagents can occur. Used above the critical micelle concentration (CMC, typically on the order of 10⁻³ to 10⁻⁴ M), very little of this surfactant will be required to generate micellar nanoreactors. The proof of concept of this micellar-approach was successfully proved by Bruce Lipshutz et al. (Aldrichimica Acta, 2008, 41, 59) for well-known palladium-catalyzed cross-coupling reactions such as the Suzuki-Miyaura, Heck, and Sonogashira reactions, using TPGS-750-M as surfactant (2 wt% in water). Interestingly, in most cases, the "hydrophobic effect" characteristic of aqueous micellar catalysis allows cross-coupling reactions to take place at room temperature, while heating would be required under traditional conditions. Indeed, as all the reagents are together in a small volume defined by the size of the micelle, this vicinity facilitates the occurrence of the reaction at lower temperature. Reactions under micellar conditions are generally very easy to proceed as everything can be done in air. Workup is also easy to handle, as when the reaction is complete, no additional water needs to be added. Only a limited amount of a single organic solvent (e.g. EtOAc) has to be used for extraction of organic remaining reactants and resulting products. As the surfactant remains in the aqueous phase in the reaction vessel, the system can be reused several times in many cases, despite the presence of water-soluble byproducts.

Barthélémy et al. (Bioorg. Med. Chem. Lett. 1998, 8, 1559-1562; Org. Lett. 1999, 1(11), 1689-1692), Polidori et al. (ARKIVOC 2006, iv, 73-89) disclose surfactants derived from Tris. These surfactants are however not disclosed in the context of platinum group metals and/or gold extraction. WO 92/02560 discloses amphiphilic fluorine derivatives with telomeric structures. However, these compounds are not disclosed in the context of platinum group metals and/or gold extraction. WO 96/38220 discloses a process for recovery of metal ions. However, this document does not disclose the surfactants of the present invention.

There is thus a need to back-extract the platinum group metals and/or gold, in particular Pd(II), contained in an organic phase, resulting in particular from liquid-liquid extraction, in order to obtain an aqueous phase containing surfactants and the platinum group metal and/or gold, in particular Pd(II), that may directly be used in platinum group metal or gold-catalyzed reactions, in particular palladium-catalyzed reactions, under micellar conditions.

However, the Inventors have found that this back extraction cannot be performed with surfactants classically used in micellar catalysis, such as TPGS-750-M, or versatile surfactants known in the art, such as SDS, Zonyl UR or Brij 35. Indeed, a very stable emulsion is obtained with these surfactants, instead of a clean separation of the organic and the aqueous phases.

Accordingly, it is an object of the present invention to provide surfactants enabling a clean separation of the organic and the aqueous phases after the extraction, in particular the back extraction, of the at least one metal chosen from the platinum group metals and gold, in particular palladium, from an organic phase into an aqueous micellar solution.

A further goal of the present invention is to obtain an aqueous phase wherein the platinum group metal or gold, in particular palladium, is stable enough, in particular towards hydrolysis, to perform directly aqueous-based platinum group metals or gold-catalyzed reactions, in particular palladium-catalyzed reactions.

Inventors have for the first time demonstrated that a selection of surfactants enables a clean separation of the organic and the aqueous phases after said extraction, in particular back extraction, and that said aqueous phase, which contains a platinum group metal or gold, in particular palladium, can directly be used, without further step, to perform aqueous-based platinum group metal or gold-catalyzed reactions, in particular palladium-catalyzed reactions.

Thus, in one aspect, the present invention relates to a process of extraction of at least one metal chosen from the platinum group metals and gold, in particular Pd(II), from a first organic liquid composition resulting from the liquid/liquid extraction of an original acidic aqueous phase comprising at least one metal chosen from the platinum group metals and gold in the form of a salt or of a complex, with an organic solvent, and comprising:
- said at least one metal chosen from the platinum group metals and gold in the form of a salt or of a complex, in particular Pd(II), and
- said organic solvent, which is water immiscible and dissolves the at least one metal chosen from the platinum group metals and gold in the form of a salt or of a complex, the organic solvent comprising or consisting of an extractant of the at least one metal chosen from the platinum group metals and gold in the form of a salt or of a complex from the original acidic aqueous phase and optionally, an organic diluent and/or a phase modifier, said extractant being chosen from the group comprising malonamides, alkyl sulfides, sulfoxides, hydroxyoximes, amines, ammonium salts, alkyl phosphine oxides, phosphine sulfides, ketones, thio and dithio-diglycolamides,
said process comprising the following steps:
a) contacting in a liquid-liquid extraction said first organic liquid composition with a first aqueous solution comprising a surfactant to obtain, after phase separation,
   - a second aqueous solution, corresponding to the aqueous phase formed when the aqueous and the organic phases obtained after the liquid-liquid extraction are separated, which is an aqueous micellar solution, comprising the at least one metal chosen from the platinum group metals and gold, in particular Pd(II), in the form of a salt or of a complex, and the surfactant, and
   - a second organic liquid composition, corresponding to the organic phase formed when the aqueous and the organic phases obtained after the liquid-liquid extraction are separated, and comprising the organic solvent;
b) recovering of said second aqueous solution,
said surfactant comprising :
- an hydrophobic central core of valence m equal to 1, 2 or 3 ;
- when m=1, a hydrophilic group G of the following formula, attached to the central core: 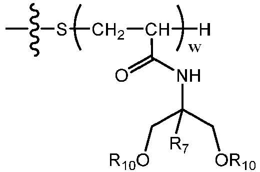 wherein:
   R₇ is selected from H, C₁-C₆ alkyl and CH₂OR₁₀;
   R₁₀ is H or a monosaccharide selected from glucose, galactose, mannose;
   w is an integer from 1 to 30, preferably from 4 to 25;
   the central core being a -L'-W' group, wherein:
      W' is R_{F} or a group selected from W'₁, W'₂ or W'₃: 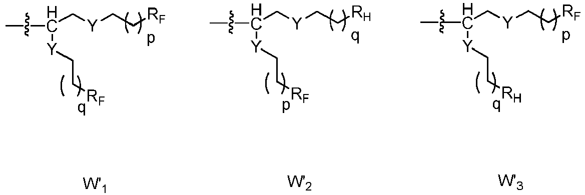
         R_{F} is a C₄-C₁₀ perfluoroalkyl or a C₁-C₂₄ alkyl group,
         R_{H} is a C₁-C₂₄ alkyl group,
         p is 0, 1, 2, 3 or 4;
         q is 0, 1, 2, 3 or 4;
      L' is a linear or branched C₁-C₁₂ alkylene group, optionally interrupted by one or more groups Y';
      Y' at each occurrence is chosen from -OC(=O)-, -C(=O)O-, -O-C(=O)-NH-, -NH-C(=O)-O-, -OC(=O)-O-, -NHC(=O)-, -C(=O)-NH, -NHC(=O)NH-, -NHC(=O)O-, -O-C(=O)-NH-, -NH-, -O- or -S-;
      Y at each occurrence is chosen from -S-, -OC(=O)-, -C(=O)O-, -O-C(=O)-NH-, -NH-C(=O)-O-, -OC(=O)-O-, -NHC(=O)-, -C(=O)-NH, -NHC(=O)NH-, -NHC(=O)O-, -O-C(=O)-NH-, -NH- or -O-;
         - when m=2 or 3, the surfactant being then a dendrimer having an hydrophilic terminal group at the end of each generation chain, the hydrophilic terminal group comprising:
            ▪ a mono-, oligo- or polysaccharide residue,
            ▪ a cyclodextrin residue,
            ▪ a polyethylene glycol (PEG) residue,
            ▪ a peptide residue,
            ▪ a tris(hydroxymethyl)aminoethane (Tris), or
            ▪ a 2-amino-2-methylpropane-1,3-diol;
      said dendrimer being of
         the following formula : 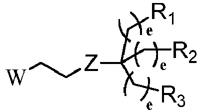 wherein :
         W is R_{F} or a group selected from: 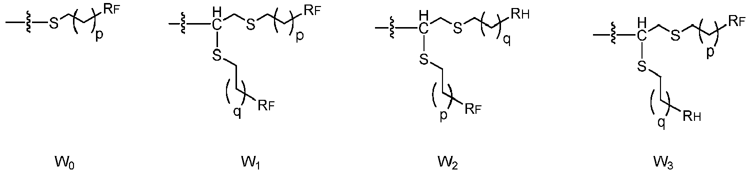
            R_{F} being a C₄-C₁₀ perfluoroalkyl or a C₁-C₂₄ alkyl group and R_{H} being a C₁-C₂₄ alkyl group,
            p is 0, 1, 2, 3 or 4;
            q is 0, 1, 2, 3 or 4;
            Z is (CO)NH or NH(CO);
         R₁, R2, R3 are H, or a group selected from (c) or (d): 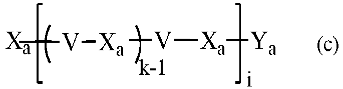 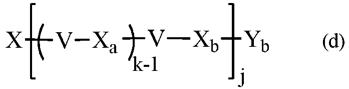 provided that:
            R₁, R2, R3 are the same and selected from either group (c) or (d) or
            one of R₁, R2, R3 is H, the two others being the same and selected from either group (c) or (d);
            X is Xₐ when j is 1 and X_{b} when j is 0;
            Xa is at each occurrence independently selected from -OC(=O)CH₂-NH-, -OC(=O)CH₂-O-CH₂-, -O(CH₂),C(=O)-NH-, -O(CH₂)ᵣC(=O)-O-CH₂, OC(=O)NH-, -C(=O)-, -NH-, and - OCH₂-;
            Ya is independently selected from: 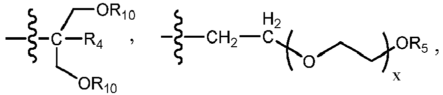
            X_{b} is 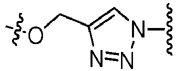
            Y_{b} is independently selected from: 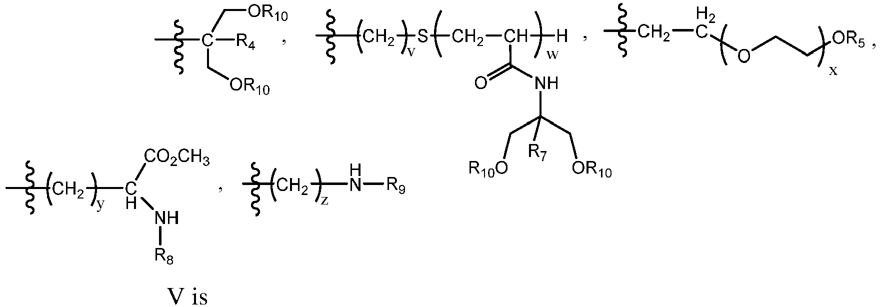 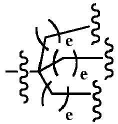
            R₄, R₇ are each independently selected from H, C₁-C₆ alkyl and CH₂OR₁₀;
            R₅ is selected from H and C₁-C₆ alkyl;
            R₆ is a mono-, oligo-, polysaccharide or a cyclodextrine residue;
            R₈, R₉ are each independently a peptide residue;
            R₁₀ is H or a monosaccharide selected from glucose, galactose, mannose;
            i is 0 or 1 ;
            j is 0 or 1;
            e is 0, 1, 2, 3 or 4;
            k is an integer from 1 to 12, preferably 1, 2, 3, 4, or 5;
            r is an integer from 1 to 10;
            u is 0, 1, 2, 3 or 4;
            v is 1, 2, or 3;
            w is an integer from 1 to 20, preferably from 1 to 10;
            x is an integer from 1 to 30, preferably from 5 to 15;
            y, z are each independently an integer from 1 to 6.

Steps a) and b) can be performed thanks to the techniques well known from the one skilled in the art, in particular by using a mixer-settler, centrifuge extractor or pulsed column.

When m=1, the surfactant is as illustrated in the following scheme 1a:

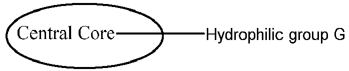

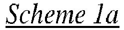

As used herein, the "valence m of the central core" refers for m=2 and 3 to the number of generation chains attached to the central core, as illustrated in the following scheme 1b:

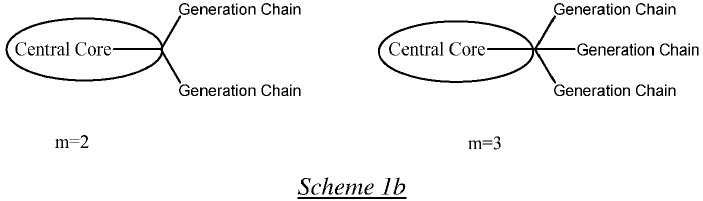

As used herein, a dendrimer of generation n=0, means that the m generation chains are connected to the central core through a first branching point (Go), corresponding to the valence of the central core. A dendrimer of generation n=1 means that each of the m generation chains ramifies itself once, more specifically at the branching point G₁ (see scheme 2).

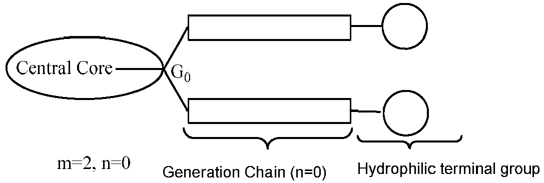

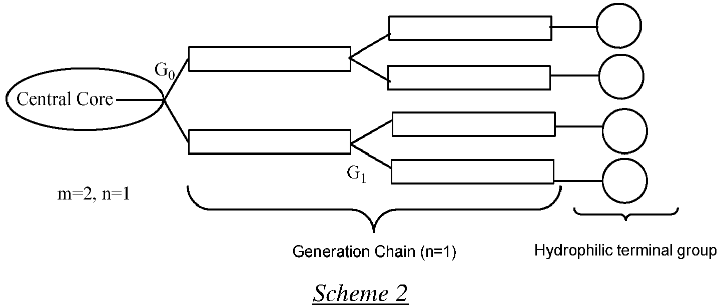

Each generation chain of the amphiphilic dendrimers according to the invention is ended by an hydrophilic terminal group.

In this respect, the mono-, oligo- or polysaccharide residue may be notably glucose, galactose, mannose, arabinose, ribose, maltose, lactose, hyaluronic acid.

The cyclodextrin residue may be selected from α, β or γ-Cyclodextrin.

The peptide residue may be chosen from linear or cyclic peptides containing the arginine-glycine-aspartic acid (RGD) sequence.

According to the present invention the organic solvent comprises or consists of an extractant of at least one metal chosen from the platinum group metals and gold, in particular Pd(II), in the form of a salt or of a complex, resulting from the liquid/liquid extraction of an original aqueous phase comprising at least one metal chosen from the platinum group metals and gold in the form of a salt or or a complex, with an organic solvent.

In a another more particular embodiment, the organic solvent comprises or consists of an extractant of at least one metal chosen from the platinum group metals and gold, in particular Pd(II), in the form of a salt or of a complex, from an acidic aqueous solution and an organic diluent.

In another more particular embodiment, the organic solvent comprises or consists of an extractant of at least one metal chosen from the platinum group metals and gold, in particular Pd(II), in the form of a salt or of a complex, from an acidic aqueous solution, an organic diluent and a phase modifier.

In a preferred embodiment, the extractant is chosen from malonamides, alkyl phosphine oxides and sulfoxides.

Malonamides as extractants, in particular dimethyldibutyltetradecylmalonamide, are described in WO2016008932.

Alkyl sulfides, for example dioctylsulfure (or DOS), dihexylsulfure (or DHS) and polysulfides, have also been described as extractants (Tatarchuk et al., Russ. J. Inorg. Chem. 2002, 47, 1917-1921; Russ. J. Inorg. Chem. 2009, 54, 1332-1338; Torgov et al., Russ. J. Inorg. Chem. 2013, 58, 1383-1389 Sulfoxides produced by the mono-sulfide oxidation, in particular dioctylsulfoxyde (or DOSO; Rizvi et al., September Sci. Tech. 1996, 31, 1805-1816) and bis(2-ethylhexyl)sulfoxide (or BESO; Shukla Singh et al., Anal. Chim. Acta 1993, 276, 181-187) have been tested successfully as extractants.

Hydroxyoximes (Dakshinamoorthy et al. Desalination 2008, 232, 26-36),.amines or ammonium salts (Mezhov et al., Radiochemistry, 2002, 44, 146-150), alkyl phosphine oxides (Gupta Singh, Hydrometallurgy 2013, 134, 11-18), phosphine sulfides (Ahmed et al., Int. J. Miner. Process. 2011, 101, 89-93), ketones (Hung et al. Solv. Extr. Ion Exch2007, 25, 407-416), thio and dithio-diglycolamides (Ruhela, et al., Tetrahedron Lett. 2011, 52, 3929-3932; Radiochimica Acta 2013, 101, 169-174) have also been presented as suitable extractants.

In a particular embodiment, the extractant is chosen from dimethyldibutyltetradecylmalonamide, bis-ethylhexyl sulfoxide or tributylphosphate.

In a preferred embodiment, said organic diluent is chosen from the group comprising aliphatic and apolar organic solvents, in particular linear and branched C₅-C₁₆ alkanes; petroleum ether; benzene and benzenes substituted by at least one linear or branched C₁-C₄ alkyl; kerosene; hydrogenated tetrapropylene (TPH); diethyl ether; n-butyl acetate; isopropyl myristate; and mixtures thereof.

Said linear and branched C₅-C₁₆ alkanes are in particular chosen from cyclopentane, pentane, cyclohexane, n-hexane, cycloheptane, n-heptane, n-octane, iso-octane, linear or branched nonane and dodecane, such as n-dodecane, hexadecane and mixtures thereof.

Said benzenes substituted by at least one linear or branched C₁-C₄ alkyl are in particular chosen from n-butylbenzene, isobutylbenzene, sec-butylbenzene, tert-butylbenzene, p-cymene, triisopropylbenzene, toluene, xylene, cumene and mixtures thereof.

A phase modifier may be admixed with the carrier solvent and the extractant to increase the solubility of the platinum group metal or gold, in particular palladium, and help prevent the formation of a third phase during extraction and when the platinum group metal or gold, in particular palladium, is stripped from the metal loaded organic extract phase. Water insoluble straight or branched chain aliphatic alcohols containing at least 6 carbon atoms in the hydrocarbon chain may generally be used as phase modifiers.

In a preferred embodiment, the phase modifier is chosen from isodecanol, 2-ethyl hexanol, 1-octanol, tridecanol and/or a mixture thereof, said phase modifier being in particular isodecanol. In a preferred embodiment, said second aqueous solution comprises more than 50%, more preferentially more than 55, 60, 65, 70, 75 or 80%, of the at least one metal chosen from the platinum group metals and gold, in particular Pd(II), in the form of a salt or of a complex, comprised in the first organic liquid composition.

This percentage can for example be calculated using the following formula: ((weight of platinum group metal in the second aqueous solution)/(weight of platinum group metal in the first organic liquid composition))* 100.

In a preferred embodiment, said second aqueous solution comprises less than 5%, more preferentially less than 4, 3 or 2%, of the organic diluent comprised in the first organic liquid composition.

This percentage can for example be calculated using the following formula: ((weight of organic diluent in the second aqueous solution)/(weight of organic diluent in the first organic liquid composition))* 100.

In a preferred embodiment, said second aqueous solution comprises less than 2%, more preferentially less than 1.5, 1.0 or 0.5%, of the extractant comprised in the first organic liquid composition.

This percentage can for example be calculated using the following formula: ((weight of extractant in the second aqueous solution)/(weight of extractant in the first organic liquid composition))* 100.

In a preferred embodiment, said second aqueous solution comprises more than 80%, more preferentially more than 82, 84, 86, 88, 90, 92, 94, 96 or 98%, of the surfactant comprised in the first aqueous solution.

This percentage can for example be calculated using the following formula: ((weight of surfactant in the second aqueous solution)/(weight of surfactant in the first aqueous composition))* 100.

In a preferred embodiment, the concentration of the at least one metal chosen from the platinum group metals and gold, in particular Pd(II), in the form of a salt or of a complex, in said first organic liquid composition is comprised from 100 to 10000 mg/L, more preferentially from 200 to 5000 mg/L.

In a preferred embodiment, the mass fraction of the surfactant in said first aqueous solution is comprised from 0.1 to 10% in weight, in particular from 0.2 to 5%, more particularly from 0.5 to 2% in weight, of said first aqueous solution.

In a preferred embodiment, the concentration of extractant in said first organic liquid composition is comprised from 0.05 to 5.0 mol/L.

In a preferred embodiment, the concentration of extractant in said first organic liquid composition is comprised from 0.3 to 0.7 mol/L, said extractant being in particular dimethyldibutyltetradecylmalonamide (DMDB TDMA).

In a preferred embodiment, the concentration of extractant in said first organic liquid composition is comprised from 0.10 to 0.25 mol/L, said extractant being in particular bis-ethylhexyl sulfoxide (BESO).

In a preferred embodiment, the mass fraction of extractant in said first organic liquid composition is comprised from 30 to 70% in weight of said first organic liquid composition, said extractant being in particular TBP.

In a preferred embodiment, the process as defined above further comprises, after step b), a step c) of performing a platinum group metal or gold-catalyzed reaction, in particular a palladium-catalyzed reaction, under micellar conditions by contacting said second aqueous solution with the reactants of said platinum group metal or gold-catalyzed reaction, in particular palladium-catalyzed reaction to obtain the product of the platinum group metal or gold-catalyzed reaction, in particular palladium-catalyzed reaction, under micellar conditions.

The palladium-catalyzed reaction is in particular a palladium cross coupling reaction, more particularly chosen from Suzuki-Miyaura, Buchwald-Hartwig, Heck, Heck-Matsuda, Sonogashira, Stille, Hiyama, Kumada, Negishi and Fukuyama reactions, in particular Suzuki-Miyaura and Buchwald-Hartwig reactions.

The gold-catalyzed reaction is in particular a gold-catalyzed cyclization.

The platinum group metal-catalyzed reaction is in particular metathesis, when the at least one metal chosen from the platinum group metals and gold is rhodium.

In a preferred embodiment, the first organic liquid composition is obtained by extracting an original aqueous phase comprising at least one metal chosen from the platinum group metals and gold, in particular Pd(II), in the form of a salt or of a complex, more particularly an acidic aqueous phase comprising at least one metal chosen from the platinum group metals and gold, in particular Pd(II), in the form of a salt or of a complex, with said extractant, optionally in presence of said organic diluent.

The extraction of said original aqueous phase comprising Pd(II) is well known from the one skilled in the art, and is for instance described in WO2016008932.

In a preferred embodiment, said at least one metal chosen from the platinum group metals and gold, in particular Pd(II), in the form of a salt or of a complex, originates from mine ore, recycling of catalytic converters or wastes.

In a preferred embodiment, said at least one metal chosen from the platinum group metals and gold, in particular Pd(II), in the form of a salt or of a complex, originates from an aqueous phase comprising nitric acid.

In a preferred embodiment, said second organic liquid composition of step a) is recovered.

In a particular embodiment, part or all of the recovered second organic liquid composition is recycled to extract said first aqueous solution comprising the at least one metal chosen from the platinum group metals and gold, in particular Pd(II), in the form of a salt or of a complex.

In a preferred embodiment, the second organic liquid composition is subjected to steps a) and b) as defined above, in particular in a co-current or counter-current process.

In a preferred embodiment, said process is a continuous process.

According to the present invention, the surfactant, when it comprises an hydrophobic central core of valence m equal to 2 or 3, is a dendrimer having generation chains attached to the central core and branching around the core and an hydrophilic terminal group at the end of each generation chain, wherein the hydrophilic terminal group comprises:
- a mono-, oligo- or polysaccharide residue,
- a cyclodextrin residue,
- a polyethylene glycol (PEG) residue,
- a peptide residue,
- a tris(hydroxymethyl)aminoethane (Tris), or
- a 2-amino-2-methylpropane-1,3-diol;
said dendrimer being of the following formula: 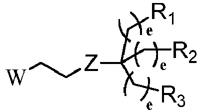 wherein :
W is R_{F} or a group selected from: 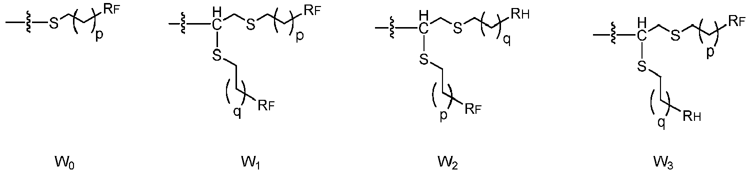
   R_{F} being a C₄-C₁₀ perfluoroalkyl or a C₁-C₂₄ alkyl group and R_{H} being a C₁-C₂₄ alkyl group,
   p is 0, 1, 2, 3 or 4;
   q is 0, 1, 2, 3 or 4;
   Z is (CO)NH or NH(CO);
R₁, R2, R3 are H, or a group selected from (c) or (d): 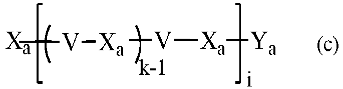 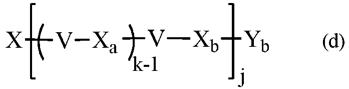 provided that:
   R₁, R₂, R₃ are the same and selected from either group (c) or (d) or
   one of R₁, R₂, R₃ is H, the two others being the same and selected from either group (c) or (d);
   X is Xₐ when j is 1 and X_{b} when j is 0;
   Xₐ is at each occurrence independently selected from -OC(=O)CH₂-NH-, -OC(=O)CH₂-O-CH₂-, -O(CH₂)ᵣC(=O)-NH-, -O(CH₂)ᵣC(=O)-O-CH₂, OC(=O)NH-, -C(=O)-, -NH-, and - OCH₂-;
   Ya is independently selected from: 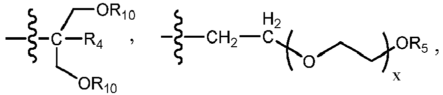
   X_{b} is 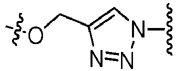
   Y_{b} is independently selected from: 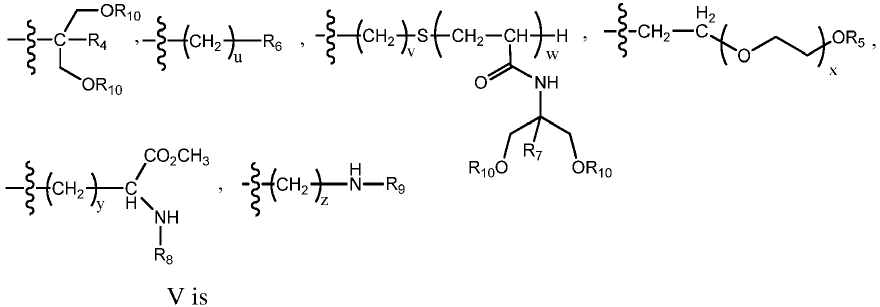 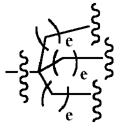
   R₄, R₇ are each independently selected from H, C₁-C₆ alkyl and CH2OR₁₀;
   R₅ is selected from H and C₁-C₆ alkyl;
   R₆ is a mono-, oligo-, polysaccharide or a cyclodextrine residue;
   R₈, R₉ are each independently a peptide residue;
   R₁₀ is H or a monosaccharide selected from glucose, galactose, mannose;
   i is 0 or 1 ;
   j is 0 or 1;
   e is 0, 1, 2, 3 or 4;
   k is an integer from 1 to 12, preferably 1, 2, 3, 4, or 5;
   r is an integer from 1 to 10;
   u is 0, 1, 2, 3 or 4;
   v is 1, 2, or 3;
   w is an integer from 1 to 20, preferably from 1 to 10;
   x is an integer from 1 to 30, preferably from 5 to 15;
   y, z are each independently an integer from 1 to 6.

In a particular embodiment, the hydrophilic terminal group of the surfactants defined above is of following formula: 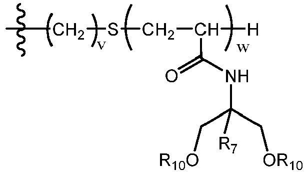 wherein R₇, R₁₀, v and w are as defined above, v being in particular equal to 3.

In a particular embodiment, the hydrophilic terminal group of the surfactants defined above is of following formula: 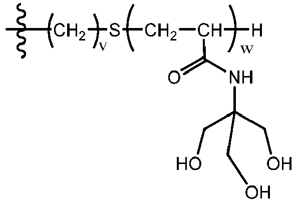 wherein v and w are as defined above, v being in particular equal to 3.

In a particular embodiment, the surfactant is selected from: 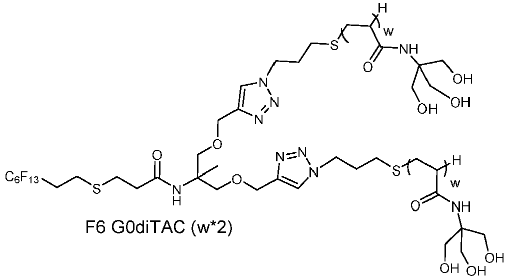 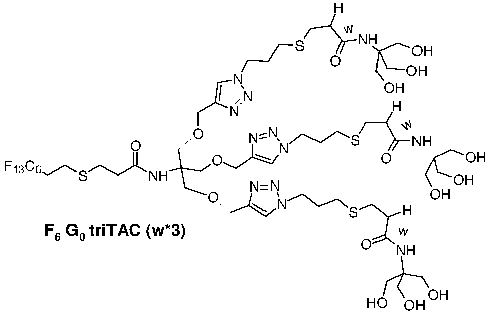 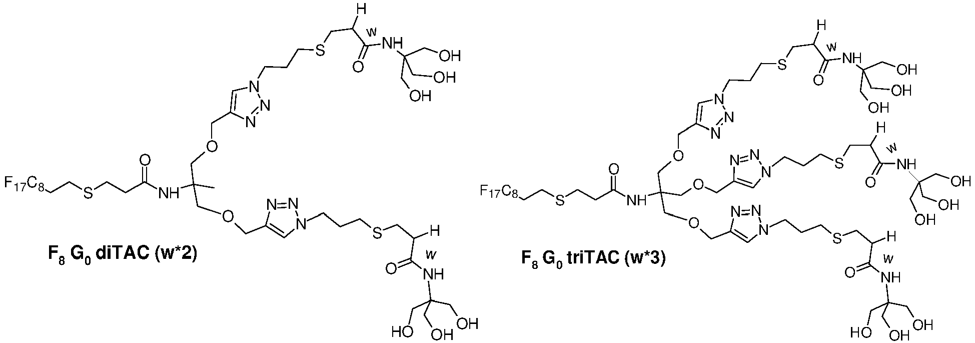 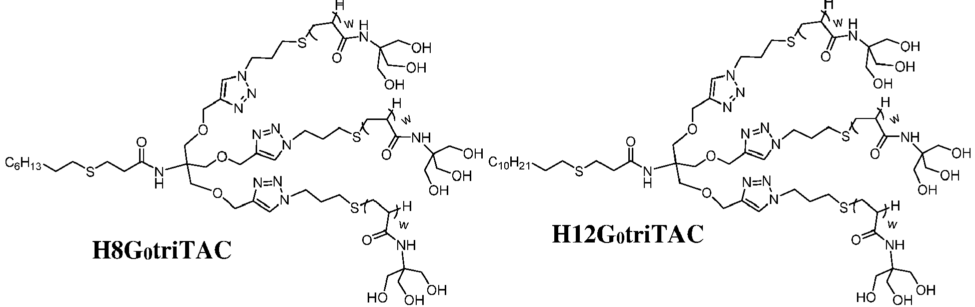 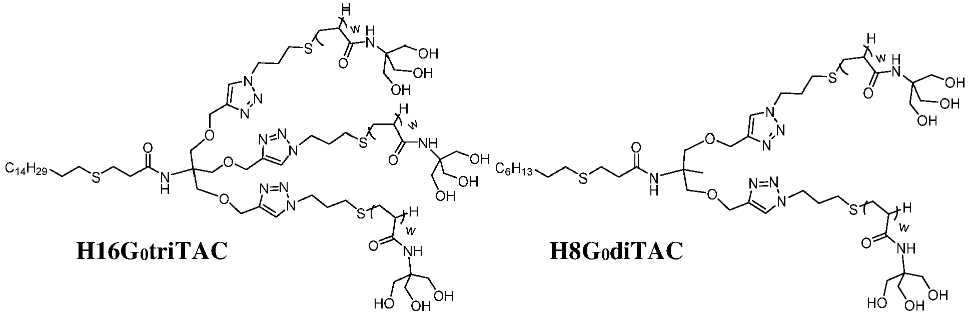 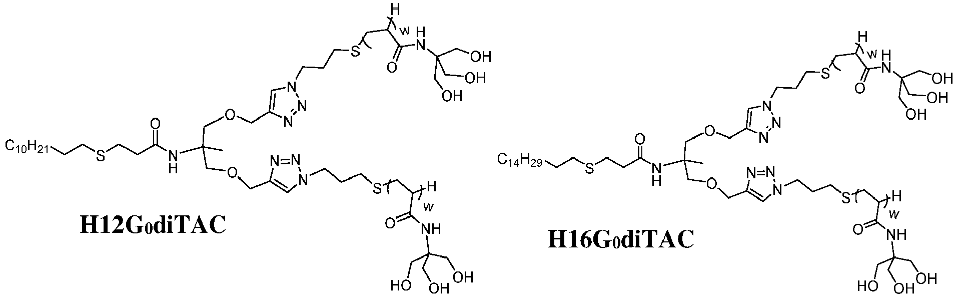 wherein w is as defined above.

According to the present invention, when the surfactant comprises an hydrophobic central core of valence m=1, has formula (A):

W'-L'-G (A)

wherein
G is a hydrophilic group of the following formula: 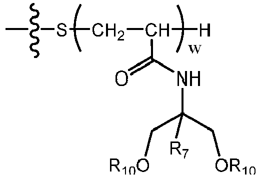 wherein:
   R₇ is selected from H, C₁-C₆ alkyl and CH₂OR₁₀;
   R₁₀ is H or a monosaccharide selected from glucose, galactose, mannose;
   w is an integer from 1 to 30, preferably from 4 to 25;
W' is R_{F} or a group selected from W'₁, W'₂ or W'₃: 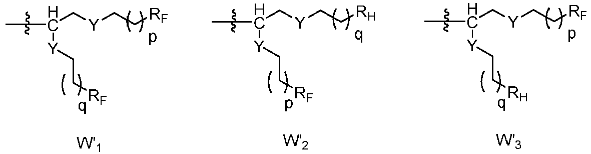
   R_{F} is a C₄-C₁₀ perfluoroalkyl or a C₁-C₂₄ alkyl group,
   R_{H} is a C₁-C₂₄ alkyl group,
   p is 0, 1, 2, 3 or 4;
   q is 0, 1, 2, 3 or 4;
L' is a linear or branched C₁-C₁₂ alkylene group, optionally interrupted by one or more groups Y';
Y' at each occurrence is chosen from -OC(=O)-, -C(=O)O-, -O-C(=O)-NH-, -NH-C(=O)-O-, -OC(=O)-O-, -NHC(=O)-, -C(=O)-NH, -NHC(=O)NH-, -NHC(=O)O-, -O-C(=O)-NH-, -NH-, -O- or -S-;
Y at each occurrence is chosen from -S-, -OC(=O)-, -C(=O)O-, -O-C(=O)-NH-, -NH-C(=O)-O-, -OC(=O)-O-, -NHC(=O)-, -C(=O)-NH, -NHC(=O)NH-, -NHC(=O)O-, -O-C(=O)-NH-, -NH- or -O-.

In one embodiment, R_{F} is a C₄-C₁₀ perfluoroalkyl and R_{H} is a C₁-C₂₄ alkyl group. In this case, the hydrophobic central core of the surfactant does comprise a perfluoroalkyl group, and said surfactant is herein referred to as F-TAC surfactants.

In another embodiment, R_{F} is a C₁-C₂₄ alkyl group and R_{H} is a C₁-C₂₄ alkyl group. In this case, the hydrophobic central core of the surfactant does not comprise a perfluoroalkyl group, and said surfactant is herein referred to as H-TAC surfactants.

In a particular embodiment, W'L' is a group selected from : 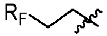 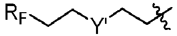 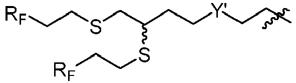 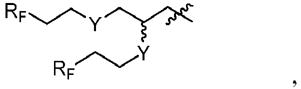 wherein R_{F}, Y and Y' are as defines above.

In a particular embodiment, Y is --S-, OC(=O)- or -C(=O)O-.

In a particular embodiment, Y' is -NHC(=O)- or -C(=O)-NH.

In a more particular embodiment, W'L' is a group selected from : 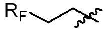 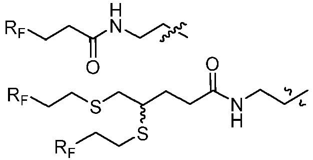 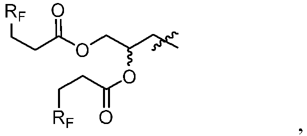 wherein R_{F} is as defines above.

In an even more particular embodiment, W'L' is a group selected from :

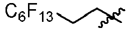

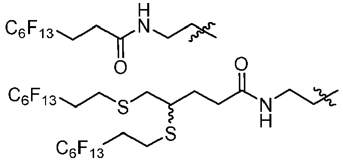

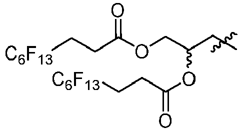

In a particular embodiment, the hydrophilic terminal group of the surfactants defined above is of following formula: 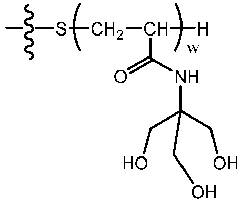 wherein w is as defined above.

In a particular embodiment, the surfactant is selected from: 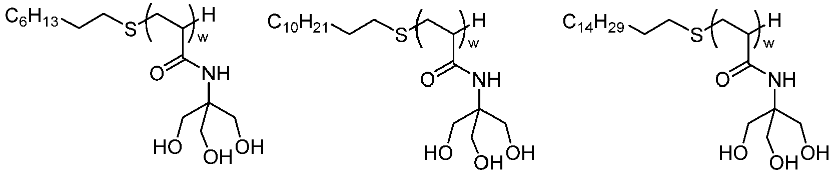 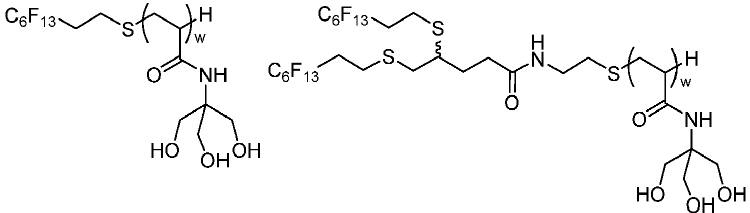 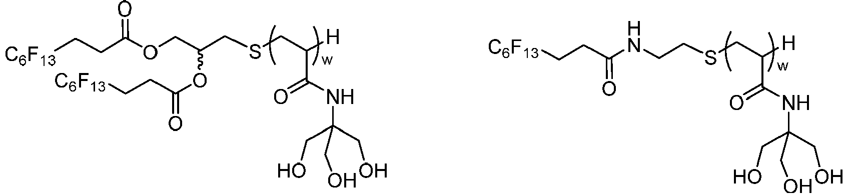 wherein w is as defined above.

In another aspect, the present invention relates to a use of a surfactant as defined above for extracting at least one metal chosen from the platinum group metals and gold, in particular Pd(II), in the form of a salt or of a complex, from a liquid composition to an aqueous micellar solution, said liquid composition resulting from the liquid/liquid extraction of an original acidic aqueous phase comprising at least one metal chosen from the platinum group metals and gold in the form of a salt, with an organic solvent and comprising:
- at least one metal chosen from the platinum group metals and gold, in particular Pd(II), in the form of a salt or of a complex,
- an organic solvent, said organic solvent being water immiscible, and comprising or consisting of an extractant of the at least one metal chosen from the platinum group metals and gold in the form of a salt or of a complex from an acidic aqueous solution and optionally, an organic diluent and/or a phase modifier, said extractant being chosen from the group comprising malonamides, alkyl sulfides, sulfoxides, hydroxyoximes, amines, ammonium salts, alkyl phosphine oxides, phosphine sulfides, ketones, thio and dithio-diglycolamides.

Said extraction is a liquid-liquid extraction, between the liquid composition and a first aqueous solution comprising said surfactant. A second aqueous solution is obtained after contacting said liquid composition and said first aqueous solution comprising said surfactant, and phase separation.

It is to be noted that the present invention includes the combination of all the embodiments listed hereabove, in particular for the solvent, the at least one metal chosen from the platinum group metals and gold, more particularly Pd(II), in the form of a salt or of a complex, and the surfactant.

In another aspect, the present invention relates to a micelle comprising at least one metal chosen from the platinum group metals and gold, in particular Pd(II), in the form of a salt or of a complex, and a surfactant as defined above.

It is to be noted that the present invention includes the combination of all the embodiments listed hereabove, in particular for the at least one metal chosen from the platinum group metals and gold, more particularly Pd(II), in the form of a salt or of a complex, and the surfactant.

Such a micelle is in particular constituted by a core, and a shell comprising the surfactant, the hydrophobic core of said surfactant pointing to the core of the micelle, wherein the at least one metal chosen from the platinum group metals and gold, in particular Pd(II), in the form of a salt or of a complex, is comprised in the core of the micelle and/or is complexed to the shell, more particularly to the hydrophilic groups of said shell.

In another aspect, the present invention relates to an aqueous micellar solution comprising at least one metal chosen from the platinum group metals and gold, in particular Pd(II), in the form of a salt or of a complex, and a surfactant as defined above.

It is to be noted that the present invention includes the combination of all the embodiments listed hereabove, in particular for the at least one metal chosen from the platinum group metals and gold, more particularly Pd(II), in the form of a salt or of a complex, and the surfactant.

In another aspect, the present invention relates to an use of a micelle as defined above or an aqueous micellar solution as defined above to perform a platinum group metal or gold-catalyzed reaction, in particular a palladium-catalyzed reaction, under micellar conditions.

In another aspect, the present disclosure relates to a amphiphilic dendrimer of generation n comprising :
- an hydrophobic central core of valence m equal to 2 or 3 ;
- generation chains attached to the central core and branching around the core; and
- an hydrophilic terminal group at the end of each generation chain;
wherein
n is an integer from 0 to 12;
the hydrophilic terminal group comprises:
- a mono-, oligo- or polysaccharide residue,
- a cyclodextrin residue,
- a polyethylene glycol (PEG) residue,
- a peptide residue,
- a tris(hydroxymethyl)aminoethane (Tris), or
- a 2-amino-2-methylpropane-1,3-diol;
the central core being a group of formula (Ia) or (Ib) : 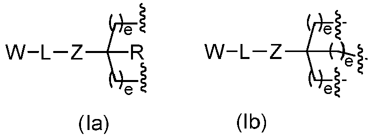 wherein:
W is R_{F} or a group selected from W₀, W₁, W₂ or W₃: 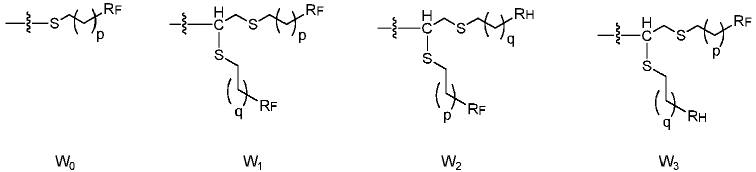
   R_{F} is a C₁-C₂₄ alkyl group,
   R_{H} is a C₁-C₂₄ alkyl group,
   p is 0, 1, 2, 3 or 4;
   q is 0, 1, 2, 3 or 4;
L is a linear or branched C₁-C₁₂ alkylene group, optionally interrupted by one or more -O-, -S-,
Z is C(=O)NH or NHC(=O),
R is a C₁-C₆ alkyl group, and
e is at each occurrence independently selected from 0, 1, 2, 3 or 4.

It is to be noted that the present disclosure includes the combination of all the embodiments listed hereabove for the dendrimers.

In another aspect, the present disclosure relates to the use of a hydrocarbon amphiphilic dendrimer as defined above as a surfactant.

In another aspect, the present disclosure relates to a compound of formula (B):

W'-L'-G (B)

wherein:
G is a hydrophilic group of the following formula: 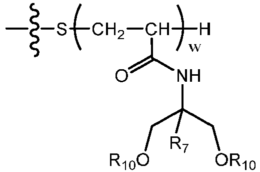 wherein:
   R₇ is selected from H, C₁-C₆ alkyl and CH₂OR₁₀;
   R₁₀ is H or a monosaccharide selected from glucose, galactose, mannose;
   w is an integer from 1 to 30, preferably from 4 to 25;
W' is R_{F} or a group selected from W'₁, W'₂ or W'₃: 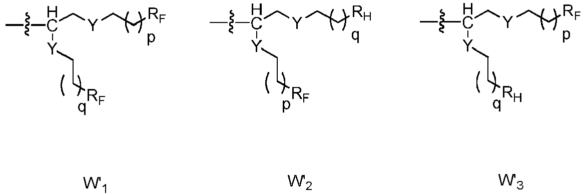
   R_{F} is a C₄-C₁₀ perfluoroalkyl or a C₁-C₂₄ alkyl group,
   R_{H} is a C₁-C₂₄ alkyl group,
   p is 0, 1, 2, 3 or 4;
   q is 0, 1, 2, 3 or 4;
L' is a linear or branched C₁-C₁₂ alkylene group, optionally interrupted by one or more groups Y';
Y' at each occurrence is chosen from -OC(=O)-, -C(=O)O-, -O-C(=O)-NH-, -NH-C(=O)-O-, -OC(=O)-O-, -NHC(=O)-, -C(=O)-NH, -NHC(=O)NH-, -NHC(=O)O-, -O-C(=O)-NH-, -NH-, -O- or -S-;
Y at each occurrence is chosen from -S-, -OC(=O)-, -C(=O)O-, -O-C(=O)-NH-, -NH-C(=O)-O-, -OC(=O)-O-, -NHC(=O)-, -C(=O)-NH, -NHC(=O)NH-, -NHC(=O)O-, -O-C(=O)-NH-, -NH- or -O-; provided that, when G is of formula 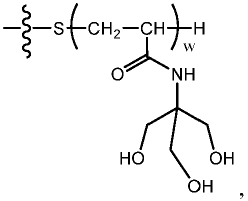 then L' is interrupted by one or more groups Y'.

In a particular embodiment, L' is interrupted by one or more groups Y'.

It is to be noted that the present disclosure includes the combination of all the embodiments listed hereabove for the compounds wherein m = 1 (F- and H-TAC).

In another aspect, the present disclosure relates to the use of a compound of formula (B) as defined above as a surfactant.

### Definitions

The following terms and expressions contained herein are defined as follows:
As used herein, a range of values in the form "x-y" or "x to y", or "x through y", include integers x, y, and the integers therebetween. For example, the phrases "1-6", or "1 to 6" or "1 through 6" are intended to include the integers 1, 2, 3, 4, 5, and 6. Preferred embodiments include each individual integer in the range, as well as any subcombination of integers. For example, preferred integers for "1-6" can include 1, 2, 3, 4, 5, 6, 1-2, 1-3, 1-4, 1-5, 2-3, 2-4, 2-5, 2-6, etc.

As used herein, the term "alkyl" refers to a straight-chain, or branched alkyl group having 1 to 24 carbon atoms, in particular 1 to 6, 10 or 12 carbon atoms, such as methyl, ethyl, propyl, isopropyl, butyl, isobutyl, sec-butyl, tert-butyl, pentyl, isoamyl, neopentyl, 1-ethylpropyl, 3-methylpentyl, 2,2-dimethylbutyl, 2,3-dimethylbutyl, hexyl, etc. A designation such as "C₁-C₁₀ alkyl" refers to an alkyl radical containing from 1 to 10 carbon atoms.

As used herein, the term "perfluoroalkyl" refers to a branched or straight hydrocarbon chain, in particular of 4 to 10 carbon atoms, in which the hydrogen atoms are replaced with fluorine atoms.

As used herein, the term "alkylene" refers to a branched or straight chained hydrocarbon of 1 to 6 carbon atoms, which is formed by the removal of two hydrogen atoms. A designation such as "C1-C4 alkylene" refers to an alkylene radical containing from 1 to 4 carbon atoms. Examples include methylene (-CH2-), 1,2-ethandiyl (-CH2CH2-), etc.

As used herein, the term "platinum group metal" refers to a metal chosen from palladium, platinum, rhodium, iridium, osmium or ruthenium, said metal being in particular palladium. Said platinum group metals and gold are in any of their oxidation states known in the art, in particular in the form of a salt or of a complex.

Said platinum group metal is in particular chosen from Pd(II), Pt(II), Pt(IV), Rh(III), Ir(III) or Ir(IV), and is more particularly Pd(II), Pt(II), Rh(III) or Ir(III), even more particularly Pd(II).

Gold is in particular Au(III).

As used herein, the term "Pd(II)" refers to a compound containing palladium having an oxidation state of +2. Said compound is in particular a salt based on Pd²⁺ cation with Cl⁻, Br⁻, I⁻, NO³⁻ as counter anions, or a [Pd(Cl)₄]²⁻ complex with NH⁴⁺ or ammoniums as counter cations.

As used herein, the term "first organic liquid composition" refers to an organic liquid composition comprising at least one metal chosen from the platinum group metals and gold, in particular Pd(II), and an organic solvent, in particular a solution of the at least one metal chosen from the platinum group metals and gold, more particularly Pd(II), in the organic solvent.

As used herein, the term "organic solvent" refers to a liquid organic compound that dissolves the at least one metal chosen from the platinum group metals and gold, in particular Pd(II), and is water immiscible.

By "water immiscible" is meant a liquid unable to form a single phase with water at 25°C and under atmospheric pressure, in the proportions implemented in the present invention, determined as the volumic ratio of aqueous phase vs organic phase, lying ususally between 0.01 and 100, and more preferentially between 0.1 and 10.

As used herein, the term "extractant" refers to a compound able to extract the at least one metal chosen from the platinum group metals and gold, in particular Pd(II), from an acidic aqueous solution to an organic phase in the context of a liquid-liquid extraction.

As used herein, the term "organic diluent" refers to a liquid organic compound or a homogenous mixture of liquid organic compounds in which the extractant and optionally the phase modifier are dissolved.

In particular, the organic diluent by itself does not extract the at least one metal chosen from the platinum group metals and gold, in particular Pd(II), from an acid aqueous solution appreciably.

As used herein, the term "phase modifier" refers to a liquid organic compound or a homogenous mixture of liquid organic compounds added to the organic diluent to improve its properties, in particular by increasing the solubility of the extractant, changing interfacial parameters or reducing adsorption losses.

The first organic liquid composition and the first aqueous solution are contacted in the context of a liquid-liquid extraction.

As used herein, the term "second aqueous solution" refers to the aqueous phase formed when the aqueous and the organic phases obtained after the liquid-liquid extraction are separated.

As used herein, the term "second organic liquid composition" refers to the organic phase formed when the aqueous and the organic phases obtained after the liquid-liquid extraction are separated.

The extraction is referred to as the "back extraction", when the organic solvent comprises or consists of an extractant of the at least one metal chosen from the platinum group metals and gold, in particular Pd(II), from an acidic aqueous solution. In this context, the liquid composition may be obtained by extraction of at least one metal chosen from the platinum group metals and gold, in particular Pd(II), from an acidic aqueous solution, by said extractant.

### FIGURES

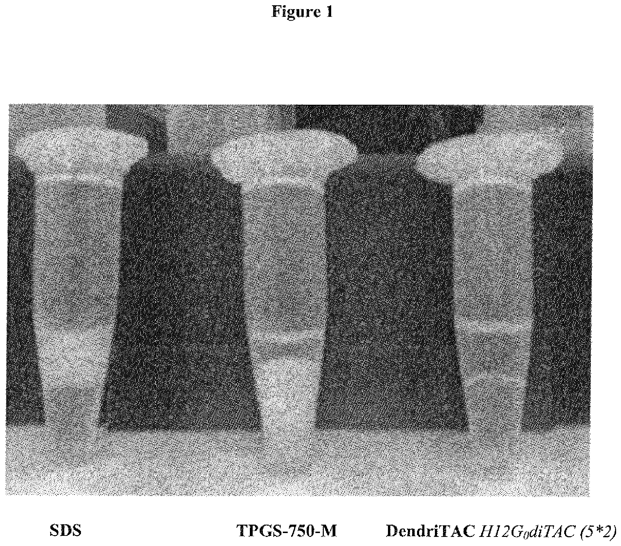

**Figure 1** shows the results obtained after contacting an equal volume of toluene and aqueous (water + 2wt% surfactant) phases and shaking for 5 min at 20°C, in the conditions described in example 4. The surfactants SDS, TPGS-750-M and DendriTAC H12GodiTAC (5^{∗}2) are respectively used.

### EXAMPLES

### General Procedure

All reagents were from commercial sources and were used as received. All solvents were distilled and dried according to standard procedures. Reactions were checked for completions by TLC (EM Science, silica gel 60 F 254) which were visualized by quenching of u.v. fluorescence (λₘₐₓ= 254 nm) or by spraying a 5% sulphuric acid solution in ethanol or a 2% ninhydrin solution in ethanol, and then by heating at ∼ 150°C. Flash chromatography were performed using *silica gel* 60 (40-63µm, 230-400 mesh) or on combiflash Rf 200 apparatus from Teledyne Isco equipped with a UV detector. Size exclusion chromatography was carried out on hydroxypropylated cross-linked dextran (LH 20) from GE Healthcare. Fluorous solid-phase extractions were performed on Fluorochrom columns from SiliCycle®.
HR-MS spectra were recorded on a mass spectrometer equipped with a TOF analyzer for ESI + experiments at the Laboratoire de Mesures Physiques of University Montpellier 2 (IBMM instrument platform).

NMR spectra were recorded on BRUCKER Avance 400 spectrometrer. Samples were prepared in CDCL₃ (referenced to 7.26 ppm for ¹H and 77.16 for ¹³C), DMSO-d6 (referenced to 2.51 ppm for ¹H and 39.52 ppm for ¹³C), MeOD (referenced to 3.31 ppm for ¹H and 49.00 for ¹³C), D₂O (referenced to 4.79 ppm for ¹H). Coupling constant (J) are in Hertz and corrected to the nearest 0.5 Hz. Multiplicities are reported as follows: s, singlet, d, doublet, dd, doublets of doublets, t, triplet, q, quartet, m multiplet, c, complex, and br broad pic. ¹H NMR spectral assignments are supported by ¹H-¹H COSY and ¹³C-¹H HSQC. Carbon spectra are supported by ¹³C-¹H HSQC analysis where necessary.

### Example 1 : Synthesis of fluorinated dendrimeric surfactants

### 1.1. Synthesis of oligomeric hydrosoluble polyTRIS moieties

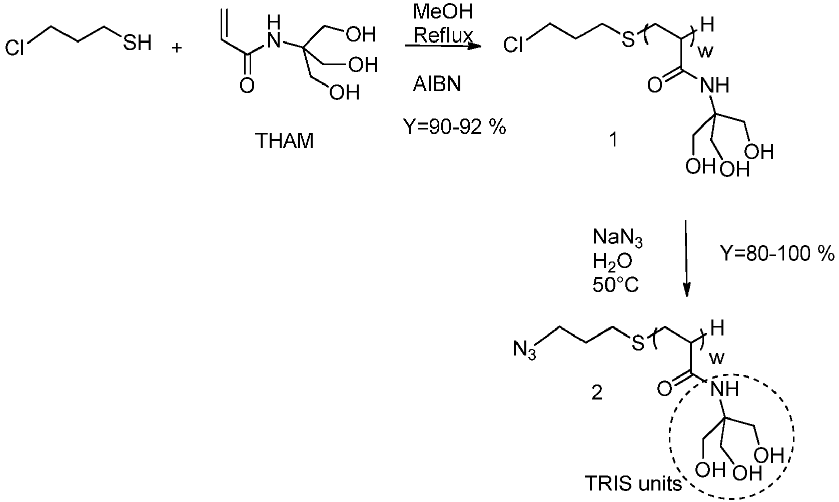

### 1.1.1. Synthesis of chloro-polyTRIS oligomer

### Synthesis of chloro-polyTRIS oligomer 1a with DPn=9.4

To a solution of Tris(hydroxymethyl)acrylamidomethane (THAM) (8 g, 45.7 mmol, 12.5 eq) in dry and degassed MeOH under reflux, are added AIBN as radical initiator (60mg, 0.365 mmol, 0.1 eq) and Chloropropanethiol as transfer reagent (354 µl, 3.65mmol, 1eq). The mixture is heated at reflux under nitrogen atmosphere until the total disappearance of the starting monomer THAM (monitored by TLC). Then the solution is filtered, concentrated and precipitated twice in Et₂O to give **1a** (7.8 g) as a pure white compound (yield= 92.8 %). The DPn is assessed by 1H-NMR in MeOD, where the integral of the peak at 2.04 ppm is set for 2 protons (middle CH₂ of the CTA (chain transfer agent)), and by dividing the integral of the CH₂ protons of Tris(hydroxymethyl)aminomethane (TRIS) units at 3.80 ppm by six. DPn = (∫CH2 at 3.80 ppm)/6.
¹H NMR (MeOD, 400 MHz) δ, 3.80 (56H, br, **CH₂**-OH), 3.70 (2H, br, **CH₂**-Cl), 2.72-2.50 (4H, c, CH₂-CH₂-**CH₂**-S, S-**CH₂**), 2.48-2.11 (5H, c, **CH**_{OLIGOMER}), 2.00 (2H, m, CH₂-**CH₂**-CH₂-S), 1.93-1.39 (8H, c, **CH**_{2 OLIGOMER}).

### Synthesis of chloro-polyTRIS oligomer 1b with DPn=5.2

To a solution of THAM (5g, 28.6 mmol, 5 eq) in dry and degassed MeOH under reflux are added AIBN (374mg, 0.228mmol, 0.4 eq) and Chloropropanethiol (551 µl, 5.7mmol, 1eq). The mixture is heated at reflux under a nitrogen atmosphere until total disappearance of the starting monomer THAM (monitored by TLC). Then the solution is filtered, concentrated and precipitated twice in Et₂O to give **1b** (5.24 g) as a pure white powder (yield= 93.1 %). The DPn is assessed by 1H-NMR in MeOD or D₂O, where the integral of the peak at 2.04 ppm is set for 2 Protons (middle CH₂ of the CTA (chain transfer agent)), and by dividing the integral of the CH2 protons of TRIS at 3.80 ppm by six. DPn = (∫CH2 at 3.80 ppm)/6.
¹H NMR (D₂O,400 MHz) δ, 4.02-3.71 (31H, br, **CH₂**-OH), 3.68 (2H, m, **CH₂**-Cl), 2.79-2.58 (4H, c, CH₂-CH₂-**CH₂**-S, S-**CH**₂), 2.56-2.11 (11H, c, **CH**_{OLIGOMER}), 2.04 (2H, br, CH₂-**CH₂**-CH₂-S), 1.93-1.39 (17H, c, **CH**_{2 OLIGOMER}).

### 1.1.2. Synthesis of azido-polyTRIS oligomer

### Synthesis of azido-polyTRIS oligomer 2a

To a solution of oligomer **1a** (4g, 2.1 mmol, 1 eq) in water (30ml), is added NaN₃ (419mg, 6.41 mmol, 3 eq). The reaction mixture is heated at 55°C, after 12H another 3 eq of NaN3 is added and the solution is heated for another 12H. The solvent is removed under vacuum and the crude is purified over LH20 with pure MeOH. 3.77 g of **2a** are recovered as a white powder (yield=94 %). (D₂O,400 MHz) δ, 3.90-3.59 (**CH**₂-**OH**), 3.44 (**CH₂**-N3), 2.71-2.48 (**CH₂**-S-**CH₂**), 2.46-2.00 (**CH**_{OLIGOMER}), 1.84-1.25 (25H, c, CH₂-**CH₂**-CH₂-S, **CH**_{2 OLIGOMER}).

### Synthesis of azido-polyTRIS oligomer 2b

To a solution of oligomer **1b** (4.23 g, 4 mmol, 1 eq) in water (30ml), is added NaN3 (780 mg, 12 mmol, 3 eq). The reaction mixture is heated at 55°C, after 12H another 3 eq of NaN3 are added and the solution is heated for another 12H. The solvent is removed under vacuum and the crude is purified over LH20 with pure MeOH. 3.4 g of **2b** are recovered (yield=80 %). (D₂O, 400 MHz) δ, 3.91-3.74 (**CH**₂-OH), 3.44 (**CH₂**-N3), 2.77-2.58 (-**CH₂**-S-**CH₂**), 2.56-2.11 (**CH**_{OLIGOMER}), 1.93-1.44 (CH₂-**CH**₂-CH₂-S, **CH**_{**2** OLIGOMER}).

### 1.2. Amphiphilic dendrimers functionalized with polyTris moieties- generation 0 (Go)

### 1.2.1. Synthesis of the Monocatenar Scaffold (Mickaël addition) F6G₀ (AB2)

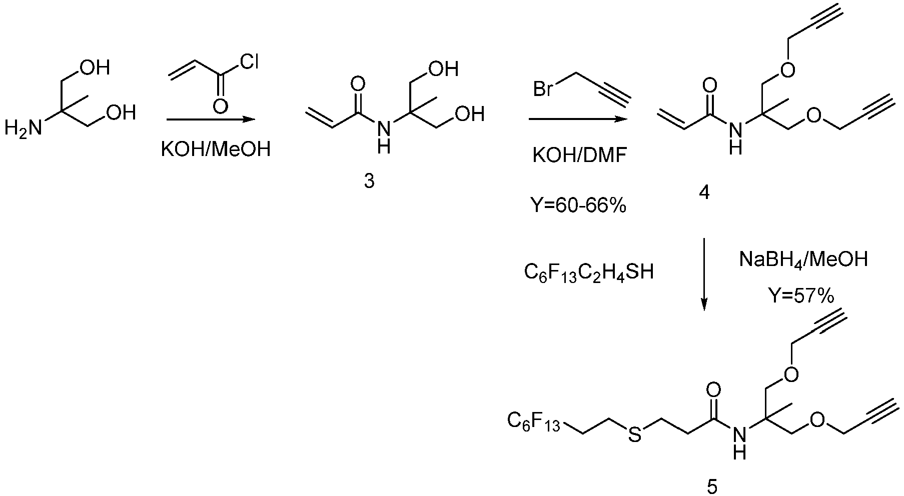

### Synthesis of compound N-(1,3-dihydroxy-2-methylpropan-2-yl)acrylamide (3)

This synthesis was already described in Journal of fluorine chemistry by M. Abla, G. Durand, C. Breyton, S. Raynal, C. Ebel, B.Pucci, J.Fluor.Chem.134, 63 (2012).

### Synthesis of compound N-(2-methyl-1,3-bis(prop-2-yn-1-yloxy)propan-2-yl)acrylamide (4)

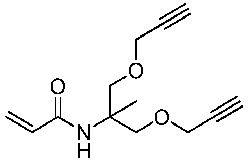

To a solution of **3** (1 eq, 2.00g, 13mmol) and propargyl bromide (2.3 eq, 3.27ml, 30mmol) dissolved in 40ml of dry DMF and cooled at 0°C, is added finely grinded KOH (2.1 eq, 1.50g, 26mmol) in portions over a period of one hour. The reaction mixture is left to warm and stirred overnight at room temperature. The mixture is diluted with 200 ml of EtOAc and washed 4 times with water. All organic phases are pooled, dried over Na₂SO₄ and concentrated *in vacuo* to dryness. The crude product is purified by silica gel column chromatography (cyclohexane /EtOAc 9:1 - 7:3 as eluent) to afford 1.48 g of pure **4** as a white powder (yield=50%). TLC Rf= 0.3 (Cyclohexane/ Ethyl acetate 7/3).
¹H NMR (CDCl₃, 400 MHz) δ 6.24-6.11 (3H, m, **CH2**=CH, NH), 5.58 5.58 (1H ,dd, J=4.0, 2.0 Hz CH 4.16 (3H, s, CH₂), 4.24-4.27 (1H, t, *J* = 6.2 Hz), 2.53 (2H, t, J =4.0 Hz), 1. 43 (3H, s, CH₃); ¹³C NMR (CDCl₃, 100 MHz) δ 165.10 (C=O), 131.78.67 (**CH₂** =CH), 125.72 (CH₂ =**CH**), 79.44 (CH), 74.76 (CH), 71.70 (**CH**₂-O), 58.38(**CH**₂-C), 56.28 (C), 18.96 (CH₃) ESI Calcd for C₁₃H₁₈NO₃ : 236.13 [M+H⁺], found *m*/*z* 236.13 [M+H⁺]. HRMS Calcd for C₁₃H₁₈NO₃: 236.1287 [M+H⁺], found m/z 236.1293 [M+H⁺].

### Synthesis of compound N-(2-methyl-1,3-bis(prop-2-yn-1-yloxy)propan-2-yl)-3-((3,3,4,4,5,5,6,6,7,7,8,8,8-tridecafluorooctyl)thio)propanamide (5)

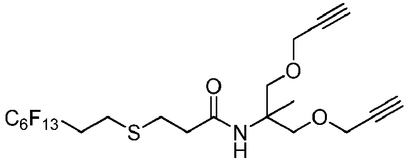

NaBH4 (396mg, 10.6mmol, 2.5eq) is added by portion to a cold solution of 1H, 1H, 2H, 2H perfluorooctanethiol (1.70g, 4.46 mmol, 1.05 eq) in dry methanol (10ml). The reaction mixture is stirred for 30 mn at 0°C. Then this solution is carefully added to a solution of 4 (1g, 4.25 mmol, 1eq) in dry methanol (90ml) and the resulting mixture is stirred for 24 h. After 24 h another 0.5 eq of 1H, 1H, 2H, 2H perfluorooctanethiol and NaBH₄ are added in the same way as previously and the mixture is stirred for another 24h. The solvent is evaporated *in vacuo* to dryness, the crude is purified over silica gel (cyclohexane /EtOAc 9:1 - 7:3 as eluent) to afford compound **5** (1.50g, yield=57%) as a pure product. TLC Rf= 0.42 (Cyclohexane/ Ethyl acetate 7/3).
¹H NMR (CDCl₃, 400 MHz) δ (5.81 (1H, NH, s), 4.16 (4H, d, *J* = 2.5 Hz CH2-Alkyne), 3.62 (2H, d, J = 9 Hz, **CH**₂-O), 3.50 (2H, d, *J* =9.0 Hz, **CH**₂-O), 2.82 (2H, t, *J* =7.0 Hz), 2.74 (2H, t, J =9.0 Hz (**CH₂**-S), 2.38-2.20 (6H, m, CF₂-**CH**₂, CH, **CH₂**-C=O), 1. 29 (3H, s, **CH**₃); ¹³C NMR (CDCl₃, 100 MHz) δ 170.63 (C=O), 79.48 (CH), 74.63 (CH), 71.91 (**CH**₂-O), 58.52(**CH**₂-C), 56.22 (C), 37.17 (**CH**₂-C=O), 31.99 (**CH**₂-CF₂), 27.60 (**CH**₂-S), 22.80 (CF₂-**CH₂**), 19.04(CH3); ¹⁹F NMR (CDCl₃, 100 MHz) -81.44 (3H, t, J =10.0 Hz), -114.70 (2H, q, J =15.0 Hz), -122.32 (2H, br s, *J*=12.0 Hz), -123.32 (2H,br s), -123.76 (2H, br s), -126.66 (2H, br s). ESI Calcd for C₂₁H₂₃F₁₃NO₃S: 616.12 [M+H⁺], found *m*/*z*: 616.12 [M+H⁺]. HRMS Calcd for C₂₁H₂₃F₁₃NO₃S: 616.1191 [M+H⁺], found *m*/*z* 616.1191 [M+H⁺].

### 1.2.2. Functionalization with hydrophilic PolyTris moieties

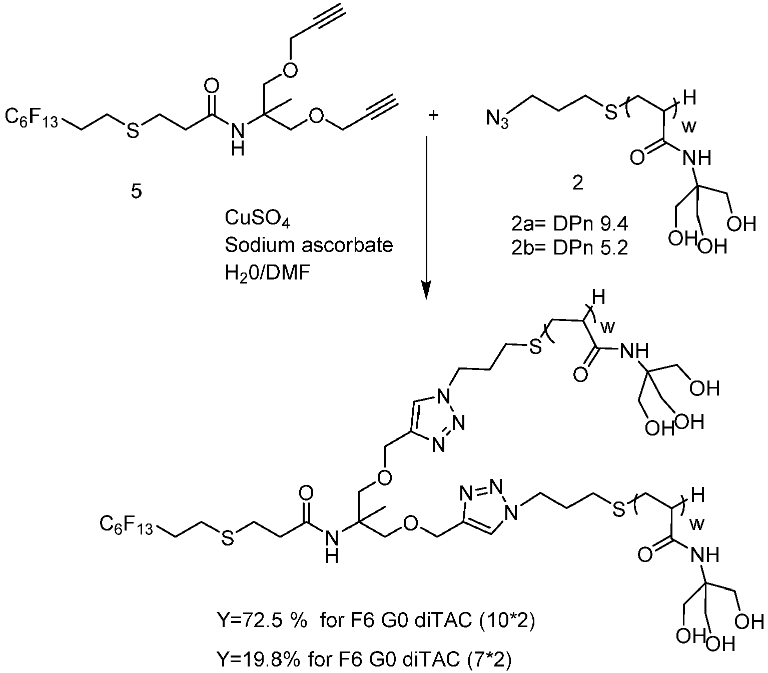

### a- Synthesis of F6 GodiTAC (10^{∗}2)

Sodium ascorbate (169 mg, 0.85 mmol, 1.2 eq), compounds 5 (438mg, 0.732 mmol, 1 eq) and **2a** (3.71g, 2mmol, 2.8 eq) (DPn=9.4) are dissolved in DMF (40ml), the reaction mixture is heated at 50°C, and after 5 minutes copper sulfate pentahydrate (71mg, 0.28, 0.2 eq) is added. The solution is heated overnight. The solution is filtered and passed through chelex beads, and then the solvent is evaporated under vacuum. The crude is dissolved in a mixture of MeOH/water 9/1, filtered and purified over LH20 MeOH/H₂O 9/1. The purification is followed by TLC (Ethyl Acetate/MeOH 5/5): only fractions with a spot staying at the start were recovered. The solvent is carefully removed *in vacuo* at a temperature about 0°C at the beginning and then at room temperature out of the water bath, then diluted with water and freeze dried. The product is further purified by fluorous solid-phase extraction (FSPE). Briefly, the column is equilibrated with 25 ml of a mixture of water and DMF (9/1), then between 100 mg and 400 mg of product are dissolved in 1ml of this mixture and deposit onto the column, after 25 ml of this eluent is pass through the column to get rid of non-fluorous compounds, then 25 ml of water, followed by 25 ml of a mixture of MeOH and Water (9/1) and finally 25 ml of pure methanol in order to rinse the column. Eluents containing methanol are concentrated *in vacuo,* dilute with water and freeze dried in order to obtain a fluffy white powder. We obtain 2.25g of compound F6 GodiTAC (10^{∗}2) with a DPn of 10; yield=72.5%.

The DPn is assessed by 1H-NMR in DMSO, where integrals of peaks at 4.40 and 4.49 ppm are set for 8 Protons (Two CH₂ in α position of the triazole ring), and by dividing the integral of the CH2 protons of TRIS at 3.80 ppm by six or dividing the integral of the OH protons, between 5.48 and 4.64 ppm, by three.
¹H NMR (DMSO-d6, 400 MHz) δ (8.07 (2H, s, **CH** triazole), 7.75-6.85 (25H, c, **NH**), 5.48-4.64 (7OH,c , **OH**), 4.49 (4H, s, C_{TRIAZOLE}-**CH**₂-O), 4.40 (4H, s, CH₂-**CH**₂-N_{TRIAZOLE}), 3.94-3.40 (143H, br, **CH**₂-OH, **CH**₂-O-), 2.71 (4H, c, CF₂-CH₂-**CH**₂-S, S-**CH**₂-CH₂-C=O), 2.50 (2H, c, CF₂-**CH**₂), 2.45 (2H, br, CH₂-CH₂-**CH**₂-S), 2.36 (2H, t, J =7.54 Hz, **CH₂**-C=O), 2.29-1.84 (29H, c, CH₂-**CH₂**-CH₂-S, **CH**₂-S, CH, **CH**₂-C=O, **CH**-C=O_{OLIGOMER}), 1.80-1.28 (38H, m, **CH**_{20LIG0MER}), 1. 18 (3H, s, **CH₃**); ¹³C NMR (DMSO-d6, 100 MHz) δ 175.68 (C=O oligomer), 170.46 (C=O), 144.01 (C-triazole), 123.79 (CH-triazole), 71.54 (**CH**₂-O), 64.01 (C_{TRIAZOLE}-**CH**₂-O), 62.35 (C), 60.53 (**CH**₂-OH) 56.36 (C), 48.16 (CH₂-Ntriazole), 42.16 (C-oligomer), 41.59 (C-oligomer), 36.06 (**CH₂**-C=O), 31.13 (**CH**₂-CF₂), 28.27 (CH₂-**CH**₂-CH₂-S), 26.97 (CF₂-CH₂-**CH**₂-S), 21.77 (S-**CH**₂-CH₂-C=O), 19.23 (CH₃); ¹⁹F NMR (DMSO-d6, 100 MHz) -80.19 (3H, t, *J* =8.68 Hz), -113.22 (2H, br), -121.73 (2H, br), -122.65 (2H, br), 122.65 (2H, br) -125.74 (2H, br).

### b- Synthesis of F6 G₀diTAC (7^{∗}2)

Sodium ascorbate (285 mg, 1.44 mmol, 1.2 eq), compounds **5** (742mg, 1.2 mmol, 1 eq) and **2** (3.82g, 3.62 mmol, 3 eq) (DPn∼5) are dissolved in mixture of DMF (100ml) and water (100ml), the reaction mixture is heated at 60°C, and after 5 minute copper sulfate pentahydrate (120mg, 0.48, 0.2 eq) is added. The solution is heated at 60°C during 3 hours and stirred at room temperature overnight. The solution is filtered and passed through chelex beads, and then the solvent is evaporated under high vacuum. The crude is dissolved in a mixture of MeOH/water 9/1 and filtered and then purified over LH20 MeOH/Water 9/1. The purification is followed by TLC (Ethyl Acetate/MeOH 5/5): only fractions with a spot staying at the start were recovered. The solvent is carefully removed *in vacuo* at a temperature about 0°C at the beginning and then at room temperature without the water bath. The mixture is diluted with water, freeze dried and further purified by FSPE as previously described to give 650 mg of compound F6 GodiTAC (7^{∗}2) with a DPn of 7; y=19.8%.
The DPn was assessed by 1H-NMR as previously described for F6 GodiTAC (10^{∗}2).
¹H NMR (DMSO-d6, 400 MHz) δ (8.06 (2H, s, **CH** triazole), 7.75-6.81 (20H, c, **NH**), 5.48-4.62 (58H,c , **OH**), 4.50 (4H, s, C_{TRIAZOLE}-**CH**₂-O), 4.41 (4H, s, CH₂-**CH**₂-N_{TRIAZOLE}), 3.77-3.47 (122H, br, **CH₂**-OH), 2.29-1.84 (28H, c, **CH**₂-S, CF₂-**CH**₂,CH, **CH**₂-C=O, **CH-**C=O_{OLIGOMER}), 1.80-1.28 (36H, m,S-**CH**_{2OLIGOMER}), 1. 24 (3H, s, **CH₃**); ¹⁹F NMR (DMSO-d6, 100 MHz) -80.44 (3H, br), -113.34 (2H, q, J =15.0 Hz), -121.92 (2H, br), -122.88 (4H, br), - 125.97 (2H, br).

### Example 2 : synthesis of hydrocarbon dendrimeric surfactants

### 1.1. Synthesis of the monocatenar scaffold (via Mickaël addition) with different hydrocarbon chain lengths (AB3 building blocks)

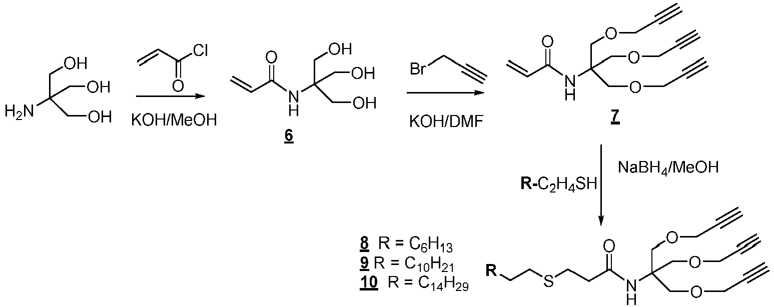

### a) Synthesis of Tris(hydroxymethyl)acrylamidomethane (compound 6):

Synthesis of compound **6** was performed using the procedure described by Pucci et al. (Eur. Polym. J., 1991, 27, 1101). To a stirred solution of tris(hydroxymethyl)aminomethane (3.00 g, 24.8 mmol) in methanolic potassium hydroxide 3N, at 0°C within a pH range between 8 and 9, acryloyl chloride (3.60 ml, 44.6 mmol) was added dropwise. The reaction mixture was stirred at 0°C for 1 h and then allowed to warm up to room temperature. After 4 h, the reaction mixture was filtered and the filtrate evaporated *in vacuo* to dryness. After precipitation and recrystallization from methanol, the desired compound **6** was obtained (3.78 g, 87%) as a white powder. m.p. 136°C; *ν*ₘₐₓ(NaCl)/cm⁻¹ 3420s *(br),* 1653s, 1560*m*, 1540*m*, 1018m; *δ*_{H} (300 MHz; DMSO-*d*₆) 3.56 (d, 6H, J 5.7, *CH*₂), 4.76 (t, 3H, J 5.7, *OH*), 5.54 (dd, 1H, *J* 2.4, *J* 9.9, Hₐ), 6,02 (dd, 1H *J* 2.4, J 17.1 Hz, H_{b}), 6.37 (dd, J 9.9, J 17.1, H_{c}), 7.42 (s, 1H, *NH*)*; δ*_{c} (75.5 MHz; DMSO-*d*₆) 60.6, 62.6, 125.2, 132.4, 165.5.

### b) Synthesis of N-acryloyl-tris[(propargyloxy)methyl]aminomethane (compound 7):

A solution of tris(hydroxymethyl)acrylamidomethane **6** (500 mg, 2.85 mmol) in anhydrous DMF (10 mL) was stirred at 0 °C with propargyl bromide (80 wt.% in Toluene 1.10 mL, 12.85 mmol). Portions of finely ground KOH (960 mg, 17.14 mmol) were added over a period of 30 min. The reaction mixture was stirred at r.t. and the course of the reaction was monitored by TLC (EtOAc/MeOH 7:3) until complete disappearance of **6.** The mixture was concentrated to dryness and the residue partitioned between ethyl acetate (200 mL) and brine (200 mL). The organic layer was washed with water, dried with Na₂SO₄ and the solvent removed at reduce pressure to give the crude product, which was purified by flash chromatography (Hexanes/EtOAc 70:30). After crystallization from ethyl acetate/hexanes, compound **7** was obtained (0.630 g, 76%) as colorless needles. R_{f} (EtOAc/Hexanes 7:3)=0.65; m.p. 85°C (from EtOAc/Hexanes). *ν*ₘₐₓ(NaCl)/cm⁻¹ 3300s *(br),* 2124*s*, 1658*s*, 1623*s*,1555*s*, 1101*s*, 799s *(br);* δ_{H} (300 MHz; CDCl₃) 2.44 (t, 3H, *J* 2.4, C=CH), 3.89 (s, 6H, C_{q}C*H*₂O), 4.15 (d, 6H, *J* 2.4, OC*H*₂C≡CH), 5.58 (dd, 1H, *J* 1.8, *J* 9.9, Hₐ), 5.86 (s,1H, NH), 6.06 (dd, 1H, *J* 9.9, J 17.1, H_{c}), 6.23 (dd, 1H, *J* 1.8, *J* 17.1, H_{b}); *δ*_{C} (75.5 MHz; CDCl₃) 58.6, 59.3, 68.4, 74.7, 79.5, 126.3, 131.4, 165.3; *m*/*z* (TOF⁺ HRMS) for C₁₆H₁₉NO₄: 290.13868 [M+H]+, found 290.13916; 312.12063 [M+Na]+, found 312.12096.

### c) Synthesis of compound N-(1,3-bis(prop-2-yn-1-yloxy)-2-((prop-2-yn-1-yloxy)methyl)propan-2-yl)-3-(octylthio)propanamide (compound 8 R=C₆H₁₃)

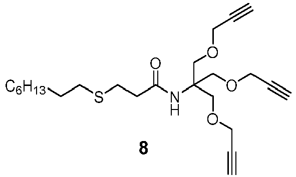

NaBH₄ (327mg, 8.65 mmol, 2.5eq) is added by portion to a cold solution of octanethiol (0.53g, 3.63 mmol, 1.05 eq) in dry methanol (10ml). The reaction mixture is stirred for 30 mn at 0°C. Then this solution is carefully added to a solution of **7** (1g, 3.46 mmol, 1eq) in dry methanol (90ml) and the resulting mixture is stirred for 24 h. After 24 h another 0.5 eq of octanethiol and NaBH₄ are added in the same way as previously and the mixture is stirred for another 24h. The solvent is evaporated *in vacuo* to dryness, the crude is purified over silica gel (cyclohexane /EtOAc 9:1-7:3 as eluent) to afford compound **8** (1.2 g, yield=79.6%) as a pure product.
¹H NMR (CDCL₃, 400MHz) δ 5.83 (NH), 4,14 (6H, d, *J* =2.38Hz, **CH₂**-C=CH), 3.83 (6H, s, **CH**₂-O), 2.75 (2H, t, *J* =7.35Hz , S-**CH**₂-CH₂-C=O), 2.50 (2H, t, *J* =7.45Hz, S-**CH₂**-CH2), 2.46-2.35 (5H, m S-CH₂-**CH₂**-C=O, **CH**=C), 1.56 (2H, m, **CH₂**-CH₂-S), 1.32 (10H, m, **CH**_{2X} 5), 0.86 (3H, t, *J* =6.89Hz **CH**₃-CH₂); ¹³C NMR (CDCl₃, 100 MHz) δ 171.51 (C=O), 79.66 (C=**CH**), 74.75 (**C**=CH), 68.66 (**CH**₂-O), 59.46 (C), 58.79 (**CH**₂-C=CH), 37.71 (S-CH₂-**CH₂**-C=O), 32.48 (S-**CH**₂-CH₂), 31.92 (**CH₂**), 29.75, 29.31, 29.30, 29.01, (**CH₂**x5), 27.77 (S-**CH**₂-CH₂-C=O), 22.75 (**CH**₂), 14.56 (**CH**₃).

### d) Synthesis of compound N-(1,3-bis(prop-2-yn-1-yloxy)-2-((prop-2-yn-1-yloxy)methyl)propan-2-yl)-3-(dodecylthio)propanamide (compound 9 R=C₁₀H₂₁)

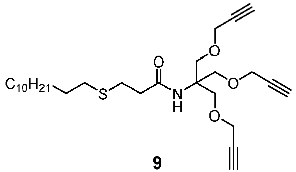

Same procedure as compound **8** (see table 1).
¹H NMR (CDCL₃, 400MHz) δ5.83 (NH), 4.10 (6H, d, *J* =2.40Hz, **CH₂**-C=CH), 3.79 (6H, s, **CH**₂-O), 2.71 (2H, t, *J* =7.45Hz S-**CH**₂-CH₂-C=O), 2.46 (2H, t, *J* =7.55Hz S-**CH₂**-CH₂), 2.42-2.33 (5H, m, S-CH₂-**CH₂**-C=O, **CH**=C), 1.52 (2H, m, **CH₂**-CH₂-S), 1.38-1.11 (18H, m, **CH**_{2X} 9), 0.86 (3H, t, J =6.85Hz **CH**₃-CH₂); ¹³C NMR (CDCl₃, 100 MHz) δ 171.39 (C=O), 79.57 (C=CH), 74.85 (C=CH), 68.54 (**CH**₂-O), 59.51 (C), 58.68 (**CH**₂-C=CH), 37.58 (S-CH₂-**CH₂**-C=O), 32.36 (S-**CH**₂-CH₂), 31.91 (**CH**₂), 29.65, 29.62, 29.60, 29.54, 29.45, 29.34, 29.26 29.17, 28.91, (**CH**_{2X}9) 27.66, (S-**CH**₂-CH₂-C=O), 22.68 (**CH**₂), 14.12 (**CH**₃). ESI Calcd for C₁₃H₁₈NO₃: 492.31 [M+H⁺], found *m*/*z* 492.31 [M+H⁺]. **HRMS** calculated: C₂₈H₄₅NO₄S: 492.3148 [M+H⁺], found *m*/*z*: 492.3148 [M+H⁺].

### e) Synthesis of compound N-(1,3-bis(prop-2-yn-1-yloxy)-2-((prop-2-yn-1-yloxy)methyl)propan-2-yl)-3-(hexadecylthio)propanamide (compound 10 R=C₁₄H₂₉)

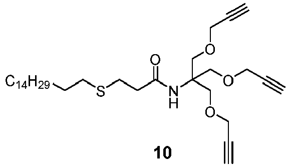

Same procedure as compound **8** (see table 1).
¹H NMR (CDCL₃, 400MHz) δ 5.84 (NH), 4.14 (6H, d, *J* =2.37Hz, **CH₂**-C=CH), 3.84 (6H, s, **CH**₂-O), 2.76 (2H, t, *J* =7.46Hz S-**CH**₂-CH₂-C=O), 2.51 (2H, t, *J* =7.55Hz, S-**CH₂**-CH₂), 2.46-2.39 (5H, m, S-CH₂-**CH₂**-C=O, **CH**=C), 1.56 (2H, m, **CH₂**-CH₂-S), 1.39-1.14 (26H, m, **CH**_{2X} 13), 0.87 (3H, t, *J* =6.84Hz **CH**₃-CH₂); ¹³C NMR (CDCl₃, 100 MHz) δ 171.53 (C=O), 79.69 (C=CH), 74.77 (C=CH) , 68.70 (**CH**₂-O), 59.49 (C) 58.82 (**CH**₂-C=CH), 37.74(S-CH₂-**CH₂**-C=O), 32.51 (S-**CH**₂-CH₂), 32.05 (**CH**₂), 29.82, 29.79, 29.68, 29.48, 29.40, 29.05, 28.91, (C**H₂**x13), 27.66, (S-**CH**₂-CH₂-C=O), 22.81 (**CH**₂), 14.24 (**CH**₃). ESI Calcd for C₁₃H₁₈NO₃: 548.37 [M+H⁺], found *m*/*z* 548.38 [M+H⁺]. **HRMS** calculated: C₂₈H₄₅NO₄S: 548.3776 [M+H⁺], found *m*/*z*: 548.3774 [M+H⁺].

**Table 1: Experimental conditions of Mickaël addition (AB3 building blocks).**

| | **9** | **10** |
|---|---|---|
| **R-C₂H₄SH** | Dodecanethiol | Hexadecanethiol |
| | 0.360g (1.78.10⁻³ mol) | 0.190g (7.37 10⁻⁴ mol) |
| **NaBH₄** | 0.161g (4.255.10⁻³ mol) | 0.066g (1.75 10⁻³ mol) |
| 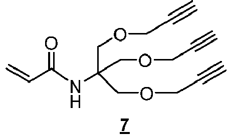 | 0.4103g (1.74.10⁻³ mol) | 0.200g (7.0210⁻⁴ mol) |
| **Mass of product** | 0.749 g | 0.321 g |
| **Yield** | 88.3 % | 83.5 % |

### 1.2. Synthesis of the monocatenar scaffold (via Mickaël addition) with different hydrocarbon chain lengths (AB2 building blocks)

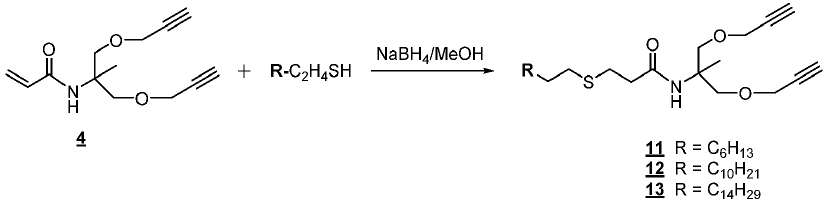

### a) Synthesis of compound N-(2-methyl-1,3-bis(prop-2-yn-1-yloxy)propan-2-yl)-3-(octylthio)propanamide (compound 11)

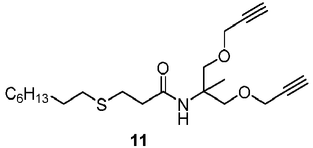

Same procedure as compound **8** (experimental conditions given on table 2).
¹H NMR (CDCL₃, 400MHz) δ 5.85 (1H, s, NH), 4.16 (4H, d, *J* =2.36Hz **CH**₂-C=CH), 3.73 (4H, dd, *J*=9.04, 51.99 Hz CH₂-O), 2.71 (2H, t, *J* =7.41Hz S-**CH**₂-CH₂-C=O), 2.52 (2H, t, *J* =7.41Hz **CH₂**-S); 2.41 (2H, t, *J* =2.37Hz **CH**=C ), 2.37 (2H, t, *J* =7.42Hz S-CH₂-**CH**₂-C=O), 1.56 (2H, m, CH₂-CH₂-S), δ=1.42-1.19 (13H, m, CH -**CH2**, **CH**₃-C), 0,87ppm (3H, t, *J* =6.89Hz **CH₃**-CH2); ¹³C NMR (CDCl₃, 100 MHz) δ 171.35 (C=O), 79.72 (C=**C**H), 74.77 (C=CH), 72.19 (**CH**₂-O), 58.79 (**CH₂**-C=CH), 56.59 (C), 37.87 (S-**CH**₂-CH₂-C=O), 32.57 (S-**CH**₂-CH₂), 31.96 (**CH₂**), 29.80, 29.35, 29.06, 27.87, (**CH₂**x6), 22.79 (**CH₂**), 19.30, 14.24 (**CH**₃). ESI Calcd for C₁₃H₁₈NO₃: 382.13 [M+H⁺], found *m*/*z* 382.24 [M+H⁺].HRMS calculated: C₂₁H₃₅NO₃S: 382.2417 [M+H⁺], found *m*/*z*: 382.2416 [M+H⁺].

### b) Synthesis of compound N-(2-methyl-1,3-bis(prop-2-yn-1-yloxy)propan-2-yl)-3-(dodecylthio)propanamide (compound 12)

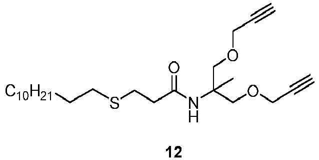

Same procedure as compound 8 (experimental conditions given on table 2).
¹H NMR (CDCL₃, 400MHz) δ 5.85 (1H, s, NH), 4.09 (4H, d, *J* =2.39Hz CH2-C=CH), 3.60 (4H, dd, *J* =9.03, 50.47Hz **CH**₂-O), 2.70 (2H, t, *J*=7.40Hz S-**CH**₂-CH₂-C=O), 2.45 (2H, t, *J*=7.40Hz **CH₂**-S), 2.40 (2H, t, *J*=2.40Hz S-**CH**₂-CH₂-C=O), 2.34 (2H, t, *J*=7.40Hz **CH≡**C ), 1.51 (2H, m, **CH₂**-CH₂-S), 1.36-0.94 (21H, m, CH₃-**CH**₂, **CH**₃-C), 0.81ppm (3H, t, *J* =6.87Hz **CH3**-CH2); ¹³C NMR (CDCl₃, 100 MHz) δ 171.15 (C=O), 79.56 (C=CH), 74.68 (C=CH), 71.96 (**CH**₂-O), 58.58 (**CH**₂-C≡CH), 56.40 (C), 37.64 (S-**CH**₂-CH₂-C=O), 32.35 (S-**CH**2-CH₂), 31.87 (**CH₂**), 29.61, 29.59, 29.57, 29.51, 29.30, 29.22, 28.87, 27.68, (**CH_{2X}**10), 22.64 (**CH**₂), 19.14, 14.09 (**CH**₃). ESI Calcd for C₁₃H₁₈NO₃: 438.30 [M+H⁺], found *m*/*z* 438.30 [M+H⁺]. **HRMS** calculated: C₂₅H₄₃NO₃S: 438.3039 [M+H⁺], found *m*/*z*: 438.3042 [M+H⁺].

### c) Synthesis of compound N-(2-methyl-1,3-bis(prop-2-yn-1-yloxy)propan-2-yl)-3-(hexadecylthio)propanamide (compound 13)

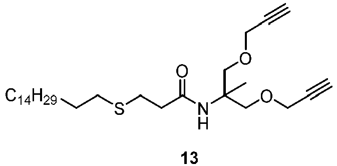

Same procedure as compound **8** (experimental conditions given on table 2).
¹H NMR (CDCL₃, 400MHz) δ 5,85 (1H, s, NH), 4.10 (4H, d, *J* =2.37Hz **CH₂**-C=CH); 3,61 (4H, dd, *J* =9.03, 50.74 Hz **CH**₂-O), 2,71 (2H, t, *J* =7.40Hz S-**CH**₂-CH₂-C=O), 2,46 (2H, t, *J*=7.40Hz **CH₂**-S), 2.40 (2H, t, *J* =2.37Hz S-**CH**₂-CH₂-C=O), 2.35 (2H, t, *J*=7.40Hz **CH**≡C ), 1.52 (2H, m, **CH₂**-CH₂-S), 1.38-1.11 (29H, m, CH₃-**CH**₂, **CH₃**-C), 0,82 (3H, t, *J* =6.85Hz **CH**₃-CH₂); ¹³C NMR (CDCl₃, 100 MHz) δ 171.17 (C=O), 79.59 (C=CH), 74.69 (C=CH), 72.01 (**CH**₂-O), 58.62 (**CH₂**-C=CH), 56.44 (C), 37.69 (S-**CH**₂-CH₂-C=O), 32.39 (S-**CH**₂-CH₂), 31.92 (**CH₂**), 29.69, 29.66, 29.61, 29.55, 29.36, 29.26, 28.91, 27.72, (**CH**_{2X}10), 22.69, (**CH₂**), 19.17, 14.12 (**CH**₃). ESI Calcd for C₁₃H₁₈NO₃: 494.36 [M+H⁺], found *m*/*z* 494.37 [M+H⁺]. **HRMS** calculated: C₂₉H₅₁NO₃S: 494.3666 [M+H⁺], found m/z: 494.3668 [M+H⁺].

**Table 2: Experimental conditions of Mickaël addition (AB2 building blocks).**

| | **11** | **12** | **13** |
|---|---|---|---|
| **R-C₂H₄SH** | Octanethiol 0.269g (1.84.10⁻³ mol) | Dodecanethiol 0.269g (1.84.10⁻³ mol) | Hexadecanethiol 0.231g (8.9.10⁻⁴ mol) |
| **NaBH₄** | 0.165g (4.37.10⁻³ mol) | 0.1598g (4.22.10⁻³ mol) | 0.0804g (2.13.10⁻³mol) |
| 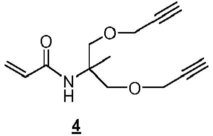 | 0.412g (1.75.10⁻³ mol) | 0.412g (1.75. 10⁻³ mol) | 0.200 g (8.5.10⁻⁴ mol) |
| **Mass of Product** | 0.450 g | 0.237 g | 0.280 g |
| **Yield** | 67.44 % | 45.20 % | 66.71 % |

### 1.3. Functionalization with hydrophilic PolyTris moieties

### a) Synthesis of hydrocarbon dendriTAC H8GotriTAC (5^{∗}3) (Compound 14)

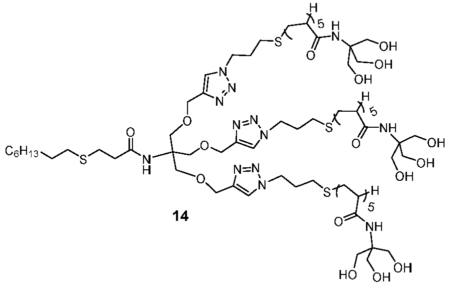

Sodium ascorbate (57 mg, 0.286 mmol, 1.1 eq), compound **11** (112mg, 0.26 mmol, 1 eq) and azido-polyTRIS oligomer **2b** (DPn ∼ 5) (1.006g, 1.01 mmol, 3.9 eq) are dissolved in mixture of DMF (7ml) and water (4ml), the reaction mixture is heated to 55°C, and after 5 minutes copper sulfate pentahydrate (17mg, 0.068mmol, 0.26 eq) is added. The solution is stirred at 60°C during 3 hours and then at room temperature overnight. The solution is filtered and passed through chelex beads, and then the solvent is carefully removed under high vacuum. The crude is dissolved in a mixture of MeOH /water 9/1 and filtered and then purified over LH20 MeOH/Water 9/1. The purification is followed by TLC (Ethyl Acetate/MeOH 5/5) only fraction where only compounds staying at the start were recovered. The solvent is carefully removed *in vacuo* at a temperature around 0°C at the beginning and then at room temperature without the water bath, diluted with water and freeze dried to obtain 377 mg of compound **14** as a white powder (yield=43.03%).
¹H NMR (DMSO-d6,400 MHz) δ 8.05 (3H, s, **CH** triazole), 7.71-6.79 (16H, c, **NH**), 5.39-4.56 (48H, c, **OH**), 4.47 (6H, s, C_{TRIAZOLE}-**CH**₂-O), 4.40 (6H, s, CH₂-**CH**₂-N_{TRLIZOLE}), 3.86-3.42 (133H, br, **CH**₂-OH, **CH**₂-O-), 2.68 (4H, c, CH₂-**CH**₂-S, S-**CH**₂-CH₂-C=O), 2.37-1.86 (27H, c, CH₂-CH₂-CH₂-S, **CH**₂-S, CH, **CH**₂-C=O, 1Ha -**CH**₂- CH₂-C=O **CH**-C=O_{OLIGOMER}), 1.82-1.09 (42H, c, **CH_{2alkyl chain} CH_{2 OLIGOMER}**), 0.85 (3H, t, J =6.95Hz **CH₃**).

### b) Synthesis of hydrocarbon dendriTAC H12GotriTAC (5^{∗}3) (Compound 15)

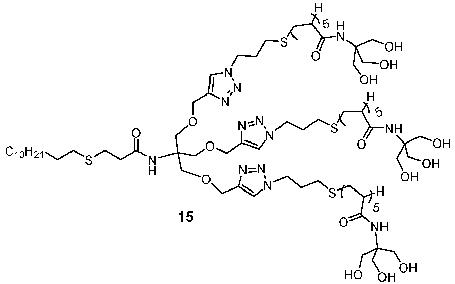

Same procedure as compound **14** (see experimental conditions on table 3).
¹H NMR (DMSO-d6, 400 MHz) δ 8.04 (3H, s, **CH** triazole), 7.78-6.69 (25H, c, **NH**), 5.43-4.57 (75H, c, **OH**), 4.48 (6H, d, *J* =7.31Hz C_{TRIAZOLE}-**CH**₂-O), 4.40 (6H, s, CH₂**-CH₂**-N_{TRIAZOLE}), 3.86-3.37 (150H, br, **CH**₂-OH, **CH**₂-O-), 2.72 (4H, c, CH₂-**CH**₂-S, S-**CH**₂-CH₂-C=O), 2.29-1.84 (40H, c, CH₂-CH₂-CH₂-S, **CH**₂-S, CH, **CH**₂-C=O, 1Ha-**CH**₂- CH₂-C=O **CH-**C=O_{OLIGOMER}), 1.79-1.13 (75H, c, **CH**_{2alkyl chain} **CH**_{2 OLIGOMER}), 0.85 (3H, t, J =6.63Hz CH₃).

### c) Synthesis of hydrocarbon dendriTAC H16GotriTAC (5^{∗}3) (Compound 16)

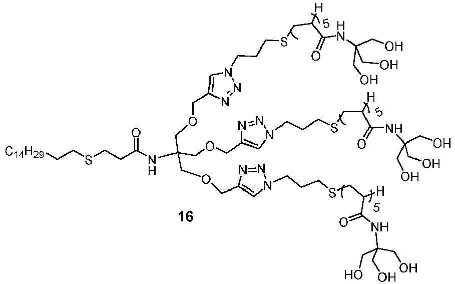

Same procedure as compound 14 (see experimental conditions on table 3).
¹H NMR (DMSO-d6, 400 MHz) δ 8.03 (3H, s, **CH** triazole), 7.74-6.75 (19H, c, **NH**), 5.50-4.56 (50H, c, **OH**), 4.47 (6H, d, J =7.64Hz C_{TRIAZOLE}-**CH₂**-O), 4.39 (6H, s, CH₂-**CH₂**-N_{TRIAZOLE}), 3.91-3.41 (96H, br, **CH**₂-OH, **CH**₂-O-), 2.68 (4H, c, CH₂-**CH**₂-S, S-**CH**₂-CH₂-C=O), 2.32-1.83 (24H, c, CH₂-**CH₂**-CH₂-S, **CH**₂-S, CH, **CH**₂-C=O, 1Ha -**CH**₂- CH₂-C=O **CH-**C=O_{OLIGOMER}), 1.80-1.01 (50H, c, **CH**₂ₐₗₖyₗ **chain CH**_{2 **OLIGOMER**}), 0.85 (3H, t, *J* =6.73Hz **CH₃**).

### d) Synthesis of hydrocarbon dendriTAC H8G₀diTAC(5^{∗}2) (Compound 17)

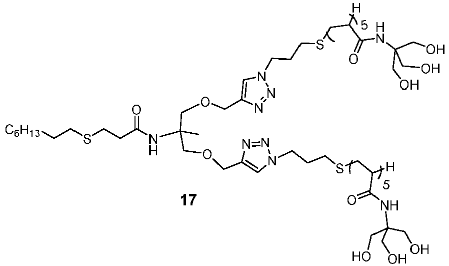

Same procedure as compound **14** (see experimental conditions on table 3); equivalents number of oligomer **2b** is 2.6 instead of 3.9.
¹H NMR (DMSO-d6, 400 MHz) δ 8.04 (2H, s, **CH** triazole), 7.74-6.75 (19H, c, **NH**), 5.57-4.58 (54H, c, **OH**), 4.49 (4H, C_{TRIAZOLE}-**CH**₂-O), 4.40 (4H, s, CH₂-**CH**₂-N_{TRIAZOLE}), 3.97-3.43 (110H, br, **CH**₂-OH, **CH**₂-O-), 2.57 (3H, m, Ha CH₂-**CH₂**-S oligomer S-**CH**₂-CH₂-C=O), 2.45 (3H, m, Hb CH₂-**CH₂**-S oligomer CH₂-**CH₂**-S), 2.29 (2H, m, S-**CH**₂-CH₂-C=O), 2.27-1.85 (27H, c, CH₂-CH₂-**CH₂**-S, **CH**₂-S, CH, **CH**₂-C=O, 1Ha -**CH**₂- CH₂-C=O **CH-**C=O_{OLIGOMER}), 1.76-1.09 (50H, c, **CH**_{2alkyl} **_{chain} CH**_{2 **OLIGOMER**}), 0.85 (3H, t, *J* =6.80Hz **CH₃**).

### e) Synthesis of hydrocarbon dendriTAC H12G₀diTAC(5^{∗}2) (Compound 18)

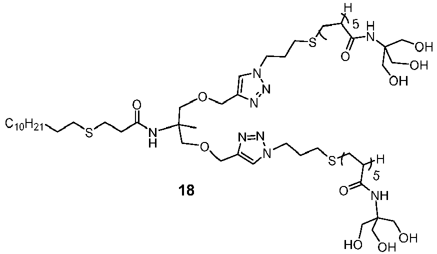

Same procedure as compound **14** (see experimental conditions on table 3); equivalents number of oligomer **2b** is 2.6 instead of 3.9.
¹H NMR (DMSO-d6, 400 MHz) δ 8.05 (2H, s, **CH** triazole), 7.77-6.72 (21H, c, **NH**), 5.30-4.56 (53H, c, **OH**), 4.49 (4H, C_{TRIAZOLE}-**CH**₂-O), 4.40 (4H, s, CH₂-**CH**₂-N_{TRIAZOLE}), 3.95-3.41 (104H, br, **CH**₂-OH, **CH**₂-O-), 2.57 (3H, m, Hb CH₂-**CH₂**-S oligomer S-**CH**₂-CH₂-C=O), 2.45 (3H, m, Hb CH₂-**CH₂**-S oligomer CH₂-**CH₂**-S), 2.31 (2H, m, S-**CH**₂-CH₂-C=O), 2.26-1.82 (27H, c, CH₂-**CH₂**-CH₂-S, **CH**₂-S, CH, **CH**₂-C=O, 1Ha -**CH**₂- CH₂-C=O **CH-**C=O_{OLIGOMER}), 1.77-1.11 (50H, c, **CH_{2alkyl chain} C**H**_{2 OLIGOMER}**), 0.85 (3H, t, *J* =6.75Hz **CH₃**).

### f) Synthesis of hydrocarbon dendriTAC H16G₀diTAC(5^{∗}2) (Compound 19)

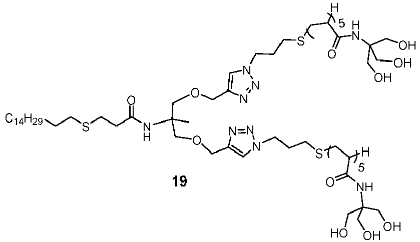

Same procedure as compound **14** (see experimental conditions on table 3); equivalents number of oligomer **2b** is 2.6 instead of 3.9.
¹H NMR (DMSO-d6, 400 MHz) δ 8.04 (2H, s, **CH** triazole), 7.79-6.56 (18H, c, **NH**), 5.45-4.57 (50H,c, **OH**), 4.48 (4H, d, J =7.52 Hz C_{TRIAZOLE}-**CH**₂-O), 4.40 (4H, s, CH₂-**CH**₂-N_{TRIAZOLE}), 3.93-3.41 (100H, br, **CH**₂-OH, **CH**₂-O-), 2.29-1.84 (25H, c, CH₂-**CH₂**-CH₂-S, **CH**₂-S, CH, **CH**₂-C=O, 1Ha -**CH**₂- CH₂-C=O **CH**-C=O_{OLIGOMER}), 1.79-1.03 (50H, c, **CH**_{2alkyl} **chain CH_{2 OLIGOMER}**), 0.85 (3H, t, *J* =6.70Hz **CH₃**).

**Table 3: Experimental conditions for the cycloaddition step.**

| **Final surfactant** | | **14** | **15** | **16** | **17** | **18** | **19** |
|---|---|---|---|---|---|---|---|
| **Propargyl** | **compound** | **11** | **12** | **13** | **8** | **9** | **10** |
| | **mass** | 0.112g | 0.075g | 0.054g | 0.150g | 0.146g | 0.150g |
| | **mol** | 2.57.10⁻⁴ | 1.5.10⁻⁴ | 9.87.10⁻⁵ | 3.39.10⁻⁴ | 3.34.10⁻⁴ | 3.04.10⁻⁴ |
| **Oligomer 2b** | | 1.006g (1.01.10⁻³ mol) | 0.775g (7.07.10⁻⁴ mol) | 0.518g (3.85.10⁻⁴ mol) | 1.059g (10.21.10⁻⁴ mol) | 0.929g (8.85.10⁻⁴ mol | 1.631g (7.9.10⁴ mol) |
| **Copper (II) sulfate** | | 17mg (0.07.10⁻⁴ mol) | 17mg (6.81.10⁻⁵ mol) | 6mg (2.57.10⁻⁵ mol) | 32mg (1.02.10⁻⁴ mol) | 23mg (8.82.10⁻⁵ mol) | 20mg (7.9.10⁻⁵ mol) |
| **Sodium ascorbate** | | 57mg (2.86.10⁻⁴ mol) | 49mg (2.47.10⁻⁴ mol) | 215mg (1.08.10⁻⁴ mol) | 85mg (4.32.10⁻⁴ mol) | 71mg (3.7.10⁻⁴ mol | 66mg (7.9.10⁻⁵ mol) |
| **Mass of product** | | 0.377g | 0.212g | 0.130g | 0.236g | 0.499g | 0.162g |
| **Yield** | | 43.03% | 40.69% | 28.80% | 29.99 % | 62.87 % | 21.74 % |

### Example 3: Synthesis of the F- or H-TAC telomers

The synthesis of F- and H-TAC telomers (Scheme 3) was already reported by Pucci et al. (European Polymer Journal. 1991, 27, 1101-1106; Curr. Med. Chem. Anticancer Agents. 2 (2002) 645-665).

### General structure of H-TAC and F-TAC telomers:

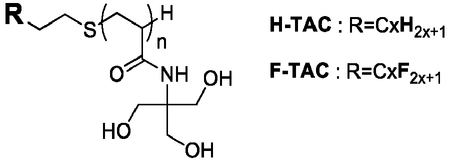

### Nomenclature:

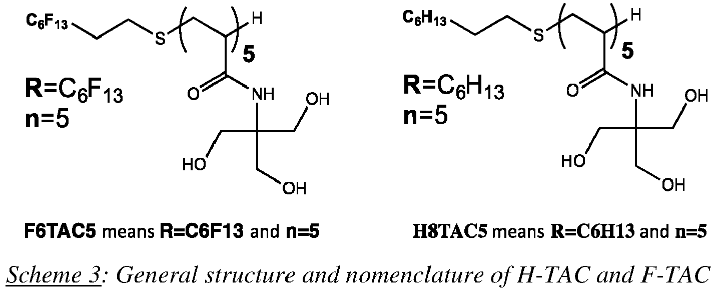

F- or H-TAC telomers are obtained by free radical telomerization of an acryloyl monomer derived from Tris, the tris(hydroxymethyl)acrylamidomethane (THAM), or from its peracetylated analogue (tris(acetoxymethyl)acrylamidomethane), in the presence of an alkane (for H-TAC) or a fluoroalkanethiol (for F-TAC) as a transfer reagent called "telogen". The synthesis of the two polymerizable monomers THAM or peracetylated THAM analogue is performed as previously reported (Jasseron et al. European Journal of Medicinal Chemistry 2003, 38, 825-836; Astafyeva et al. J. Mater. Chem. B 2015, 3, 2892-2907). The physicochemical parameters of the resulting telomers (molecular weight, Hydrophilic Lipophilic Balance, electric charge) can be adjusted through both the starting material and the experimental conditions (Pucci *et al., ibid.).* Telomerization experiments are respectively performed in methanol (MeOH), when the monomer THAM is used as starting material, and in tetrahydrofuran (THF) for peracetylated THAM. The use of this later monomer is necessary for the synthesis of telomers with a degree of polymerization (DPn; average number of repeating units on the polymeric backbone + 1 (telogen moiety)) higher than 15 due to the limited solubility of polyTris oligomers in pure methanol for such DPn values (Giusti et al., New J. Chem. 2002, 26, 1724-1732). Alternatively, it is also possible to synthetise telomers with a DPn higher than 15 starting from THAM using a mixture of MeOH/H2O (90/10 to 80/20, v/v) as solvent.

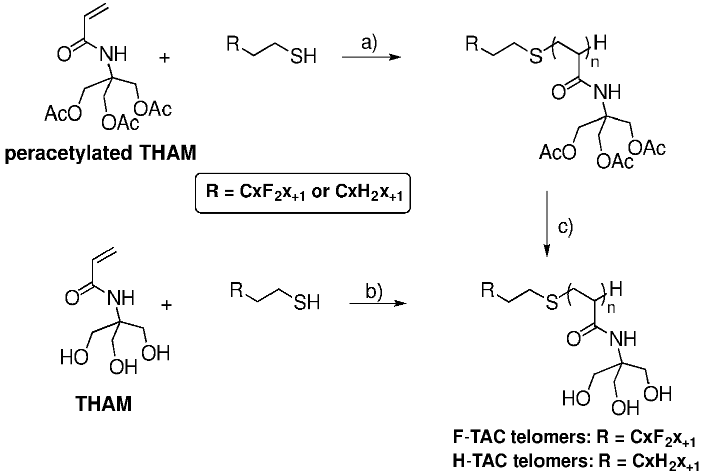

**Synthesis of F- and H-TAC surfactants.** *Reagents and conditions:* (a) AIBN/THF, reflux (62-66%); (b) i: AIBN/CH₃OH, reflux or ii: AIBN/[CH₃OH/H2O, 90/10, v/v], reflux (62-73%); (c) MeONa cat. /MeOH, room temperature (100 %).

Telomerization experiments are carried out by refluxing monomer THAM or peracetylated THAM in dry and degassed appropriate solvent, under a nitrogen atmosphere, in the presence of alkane- or fluoroalkanethiol as transfer reagent and AIBN (a,a'-azobisisobutyronitrile) as radical initiator. The AIBN concentration in the reaction mixture is ten times lower than the telogen one (C.M. Starks, Free radical telomerization, Academic Press, New York, 1974). The starting proportions of monomer THAM or peracetylated THAM and telogen used are reported in table 4. These proportions are chosen taking into account previous results obtained with THAM telomerization. The reaction is monitored by thin layer chromatography and pursued until complete disappearance of each monomer (4 to 12 h). For telomers prepared starting from THAM, the solution is then concentrated and subsequently precipitated in diethyloxyde. The precipitate is dissolved in water and freeze dried to give final surfactants as white powders. As regards peracetylated telomers, after total disappearance of monomer peracetylated THAM, a final treatment under Zemplén conditions (Astafyeva *et al., ibid.)* provides the desired water soluble telomers in satisfactory yields and NMR analysis confirmes the total disappearance of acetyl groups. Telomers with DPn>15 are all purified by precipitation in diethyloxyde. The resulting precipitate is dissolved in water and a dialysis (cut off of 1000) is performed overnight, the solution is freeze dried to obtain final surfactants as white powders.

For all the series of telomers, the degree of polymerization depends on the telogen/monomer ratio adjusted through both starting materials and experimental conditions (Pucci et al. European Polymer Journal 1988, 24, 1077-1086). For a given transfer reagent, it may vary from one (monoadduct) to several tens. DPn are determined in 1H-NMR or 19F-NMR by comparing the area of typical signals ascribed to each monomer and telogen.

For example, in the case of hydrocarbon telomers (H-TAC) DPn values are determined by comparing peaks area assigned to the terminal methyl signal in the hydrocarbon tail (d 0.9 ppm, integral 3H) respectively to hydroxyl groups of THAM (d 4.5-5.3 ppm, integral 3nH) or to methylene protons of peracetylated THAM (d 4.32 ppm, integral 6nH). Concerning fluorocarbon telomers (F-TAC) the DPn is assessed by quantification of fluorine using 19F-NMR as described by Astafyeva et al. *(ibid.).*

**Table 4: Conditions of F- or H-TAC synthesis**

| Compound | R | Monomer | Initial Condition [monomer] /[telogen] | solvent | DPn | Yield (%) |
|---|---|---|---|---|---|---|
| F₆TAC₇ | C₆F₁₃ | THAM | 3 | MeOH | 7 | 62,2 |
| F₆TAC₁₃ | C₆F₁₃ | THAM | 5 | MeOH | 13 | 58,2 |
| F₆TAC₁₈ | C₆F₁₃ | THAM(OAc) | 15 | THF | 18 | 46,6 |
| F₆TAC₂₂ | C₆F₁₃ | THAM(OAc) | 20 | THF | 22 | 55 ,7 |
| H₈TAC₆ | C₆H₁₃ | THAM(OAc) | 5 | THF | 6 | 56,4 |
| H₈TAC₈ | C₆H₁₃ | THAM | 5 | MeOH | 8 | 50,5 |
| H₈TAC₉ | C₆H₁₃ | THAM | 6 | MeOH | 9 | 49 |
| H₁₂TAC₆ | C₁₀F₂₁ | THAM | 6 | MeOH | 6 | 38,8 |
| H₁₂TAC₉ | C₁₀F₂₁ | THAM | 8 | MeOH | 9 | 44,8 |

### Example 4 : Study of the phases separation

An equal volume of organic solvent and aqueous (water + amhiphile) phases were contacted and shaken for 5 min at 20°C. The mixture was let to separate for 5 mins, and phase separation was visually characterized. In the case of the presence of an emulsion, the mixture was centrifuged at 5000 rpm for 3 min, then visually observed again. When persisting in this case, the emulsion was qualified as "stable".

| Solvent | toluene | toluene | toluene | toluene | toluene | toluene |
|---|---|---|---|---|---|---|
| Amphiphile | Sodium dodecyl sulfate (SDS) | TPGS-750M | H8-TAC6 | F6-TAC6 | Zonyl UR | Brij 35 |
| (amount) | (2% wt) | (2% wt) | (2% wt) | (2% wt) | (2% wt) | (2% wt) |
| Result | Stable Emulsion | Stable Emulsion | Clean phase separation | Clean phase separation | Stable Emulsion | Stable Emulsion |

Zonyl UR is a fluorinated phosphate (mixture of mono & di esters, DuPont product), Brij 35 is a non-ionic surfactant (C12-(EO)23).

The surfactants of the invention enable clean phase separation, whereas the surfactants SDS, TPGS-750M, Zonyl UR and Brij 35 lead to a stable emulsion.

### Example 5 : Study of the phases separation in presence of an extractant

An equal volume of organic (extractant + diluent) and aqueous (water + amhiphile) phases were contacted and shaken for 5 min at 20°C. The mixture was let to separate for 5 mins, and phase separation was visually characterized. In the case of the presence of an emulsion, the mixture was centrifuged at 5000 rpm for 3 min, then visually observed again. When persisting in this case, the emulsion was qualified as "stable".

| Diluent | toluene | toluene | toluene | toluene | toluene | toluene | none |
|---|---|---|---|---|---|---|---|
| Extractant | DMDBTD-MA | DMDBTD-MA | DMDBTD-MA | DMDBTD-MA | DMDBTD-MA | BESO | TBP |
| (amount) | (0,5 mol/L) | (0,5 mol/L) | (0,5 mol/L) | (0,5 mol/L) | (0,5 mol/L) | (0,3 mol/L) | (pure) |
| Amphiphile | H8TAC6 | F6TAC6 | H16G₀triTAC (5^{∗}3) | H12G₀diTAC (5^{∗}2) | F6TAC17 | F6TAC17 | F6TAC17 |
| (amount) | (2% wt) | (2% wt) | (2% wt) | (1% wt) | (2% wt) | (2% wt) | (2% wt) |
| Result | Clean phase separation | Clean phase separation | Clean phase separation | Clean phase separation | Clean phase separation | Clean phase separation | Clean phase separation |

| | | | | | | | |
|---|---|---|---|---|---|---|---|
| DMDBTDMA = dimethyldibutyltetradecylmalonamide, BESO = Bis-ethylhexyl sulfoxide, TBP = tributylphosphate. | | | | | | | |

The surfactants of the invention enable clean phase separation.

### Example 6: Extraction of an organic phase comprising Pd using the surfactants of the invention

An organic phase loaded with Pd was prepared by contacting a solvent (see table below) with an aqueous solution of nitric acid containing Pd(II) nitrate, followed by shaking for 1h, and phase separation. The so obtained organic phase (800 µL) was contacted with an aqueous phase (400 µL, see table below), and the system was shaken in a closed cap vial for 30 min at 20°C. The phases were allowed to separate for 5 min, then 200 µL of each phase were taken for quantitative Pd analysis (performed with a SpectroArcos ICP-AES spectrometer). The back extraction yield was determined as follows : yield = amount of Pd in final aqueous phase / amount of Pd in initial organic phase. Quantitative recovery of Pd (within the analytical limits) was checked in all cases (amount of Pd in initial organic phase = amount of Pd in final aqueous phase + amount of Pd in final organic phase).

| Diluent | toluene | toluene | none |
|---|---|---|---|
| Extractant | DMDBTDMA | BESO | TBP |
| (amount) | (0,5 mol/L) | (0,3 mol/L) | (pure) |
| Pd-back extraction yield with water alone | 50% | 2,50% | 13% |
| Pd-back extraction yield with F6-TAC17 (2% wt) | 72% | 31% | 78% |

### Example 7: Buchwald-Hartwig cross-coupling reaction using commercial palladium source in presence of the surfactants of the invention, compared to TPGS-750M General procedure (Wagner et al., Green Chemistry 16:4170-4178)

Amine (1.2 equiv.) and aryl halide (1 equiv.) were added to an aqueous solution of surfactant (2 wt %, 1mL/mmol). The mixture was degassed by bubbling Argon, and NaOt-Bu (1.5 equiv.), [(cinnamyl)PdCl]₂ (1.1 mol%) and t-BuXPhos (4.4 mol%) were added. The mixture was stirred (at 1200 rpm) at 50°C (2-24h). Volatiles were evaporated and the crude residue was purified by chromatography on silica gel.

**N-(3-Methylphenyl)-4-methoxybenzamide:** Following the general procedure of the Buchwald-Hartwig cross-coupling reaction, we used [(cinnamyl)PdCl]₂ (5.7 mg, 0.011 mmol), t-BuXPhos (18.7 mg, 0.044 mmol), 3-bromotoluene (121 µL, 1.0 mmol), p-methoxybenzamide (181 mg, 1.2 mmol) and NaOt-Bu (144 mg, 1.5 mmol) in presence of various surfactants (20 mg in 1 mL of water). Purification was performed by column chromatography on silica gel with the following eluent : n-heptane/ethyl acetate (7/3 to 5/5). After evaporation, N-(3-Methylphenyl)-4-methoxybenzamide was recovered as white solid. 1H NMR (400 MHz, CDC13) δ 2.34 (s, 3H), 3.87 (s, 3H), 6.95-6.97 (m, 3H), 7.25 (t, J = 7.7 Hz, 1H), 7.41 (d, J = 7.7 Hz, 1H), 7.51 (s, 1H), 7.80 (d, J = 8.9 Hz, 2H), 7.87 (br s, 1H); 13C NMR (101MHz, CDC13) δ 21.5, 55.4, 113.9, 117.2, 120.8, 125.1, 127.2, 128.8, 128.9, 138.0, 138.9, 162.4, 165.2.

Results are shown in the table below:

| Surfactant (2%) | Yield (%) | Surfactant (2%) | Yield (%) |
|---|---|---|---|
| **TPGS-750-M** | 93 | | |
| | | F6TAC7 | 81 |
| F6 G₀diTAC (10^{∗}2) | 79 | F6TAC13 | 82 |
| H8G₀triTAC (5^{∗}3) | 88 | F6TAC17 | 78 |
| H8G₀diTAC (5^{∗}2) | 88 | H8TAC6 | 89 |
| H12G₀diTAC (5^{∗}2) | 86 | H8TAC8 | 84 |
| H12G₀triTAC (5^{∗}3) | 85 | H8TAC9 | 86 |
| H16G₀triTAC (5^{∗}3) | 86 | H12TAC6 | 84 |
| H16G₀diTAC (5^{∗}2) | 89 | H12TAC9 | 84 |

### Example 8: Suzuki-Miyaura cross-coupling reaction using back-extracted palladium in micellar medium

To a solution of back-extracted palladium in water (80 µL) containing the surfactant H12GodiTAC (5^{∗}2) (2% w:w) were added 3-bromoanisole (1 eq., 12.5 mg, 0.00848 mL, 0.0667 mmol), phenylboronic acid (1.2 eq., 9.75 mg, 0.08 mmol), Bippyphos (4.4 %, 3.83 mg, 0.00733 mmol) and triethylamine (1.86 eq., 12.5 mg, 0.0172 mL, 0.124 mmol). The reaction mixture was stirred at room temperature for 16h in a Bioshake IQ at 1 800 rpm. The aqueous phase was extracted with ethyl acetate. This organic phase was evaporated and the crude residue was purified by chromatography on silica gel using ethyl acetate and n-heptane as eluent to provide 1-methoxy-3-phenylbenzene (10.4mg, 0.057mmol, 34% yield). 1H NMR (400 MHz, CDC13): δ 7.58 (d, J = 5.2 Hz, 2H), 7.44 (t, J = 5.1 Hz, 2H), 7.37-7.34 (m, 2H), 7.18 (d, J = 5.1 Hz, 1H), 7.13 (s, 1H), 6.91-6.89 (m, 1H), 3.87 (s, 3H).

## Claims

1. A process of extraction of at least one metal chosen from the platinum group metals and gold from a first organic liquid composition resulting from the liquid/liquid extraction of an original acidic aqueous phase comprising at least one metal chosen from the platinum group metals and gold in the form of a salt or of a complex, with an organic solvent, and comprising:
- said at least one metal chosen from the platinum group metals and gold in the form of a salt or of a complex, and
- said organic solvent, which is water immiscible and dissolves the at least one metal chosen from the platinum group metals and gold in the form of a salt or of a complex, the organic solvent comprising or consisting of an extractant of the at least one metal chosen from the platinum group metals and gold in the form of a salt or of a complex from the original acidic aqueous phase and optionally, an organic diluent and/or a phase modifier, said extractant being chosen from the group comprising malonamides, alkyl sulfides, sulfoxides, hydroxyoximes, amines, ammonium salts, alkyl phosphine oxides, phosphine sulfides, ketones, thio and dithio-diglycolamides,
said process comprising the following steps:
**a)** contacting in a liquid-liquid extraction said first organic liquid composition with a first aqueous solution comprising a surfactant to obtain after phase separation,
- a second aqueous solution, corresponding to the aqueous phase formed when the aqueous and the organic phases obtained after the liquid-liquid extraction are separated, which is an aqueous micellar solution, comprising the at least one metal chosen from the platinum group metals and gold in the form of a salt or of a complex and the surfactant, and
- a second organic liquid composition, corresponding to the organic phase formed when the aqueous and the organic phases obtained after the liquid-liquid extraction are separated, and comprising the organic solvent;
**b)** recovering of said second aqueous solution,
said surfactant comprising :
- an hydrophobic central core of valence m equal to 1, 2 or 3 ;
- when m=1, a hydrophilic group G of the following formula, attached to the central core: 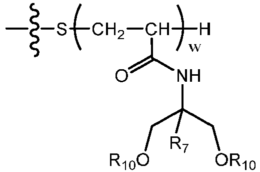 wherein:
R₇ is selected from H, C₁-C₆ alkyl and CH₂OR₁₀;
R₁₀ is H or a monosaccharide selected from glucose, galactose, mannose;
w is an integer from 1 to 30, preferably from 4 to 25;
the central core being a -L'-W' group, wherein:
W' is R_{F} or a group selected from W'₁, W'₂ or W'₃: 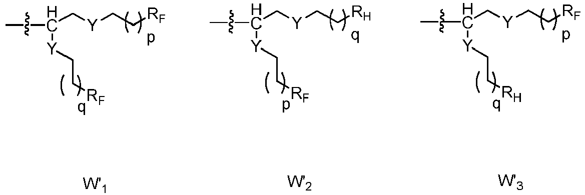
R_{F} is a C₄-C₁₀ perfluoroalkyl or a C₁-C₂₄ alkyl group,
R_{H} is a C₁-C₂₄ alkyl group,
p is 0, 1, 2, 3 or 4;
q is 0, 1, 2, 3 or 4;
L' is a linear or branched C₁-C₁₂ alkylene group, optionally interrupted by one or more groups Y';
Y' at each occurrence is chosen from -OC(=O)-, -C(=O)O-, -O-C(=O)-NH-, -NH-C(=O)-O-, -OC(=O)-O-, -NHC(=O)-, -C(=O)-NH, -NHC(=O)NH-, -NHC(=O)O-, -O-C(=O)-NH-, -NH-, -O- or -S-_{;}
Y at each occurrence is chosen from -S-, -OC(=O)-, -C(=O)O-, -O-C(=O)-NH-, -NH-C(=O)-O-, -OC(=O)-O-, -NHC(=O)-, -C(=O)-NH, -NHC(=O)NH-, -NHC(=O)O-, -O-C(=O)-NH-, -NH- or -O-;
- when m=2 or 3, the surfactant being then a dendrimer having an hydrophilic terminal group at the end of each generation chain, the hydrophilic terminal group comprising:
▪ a mono-, oligo- or polysaccharide residue,
▪ a cyclodextrin residue,
▪ a polyethylene glycol (PEG) residue,
▪ a peptide residue,
▪ a tris(hydroxymethyl)aminoethane (Tris), or
▪ a 2-amino-2-methylpropane-1,3-diol;
said dendrimer being of the following formula: 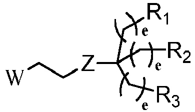 wherein :
W is R_{F} or a group selected from: 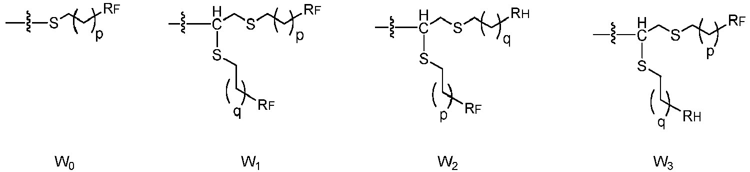
R_{F} being a C₄-C₁₀ perfluoroalkyl or a C₁-C₂₄ alkyl group and R_{H} being a C₁-C₂₄ alkyl group,
p is 0, 1, 2, 3 or 4;
q is 0, 1, 2, 3 or 4;
Z is (CO)NH or NH(CO);
R₁, R₂, R₃ are H, or a group selected from (c) or (d): 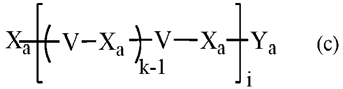 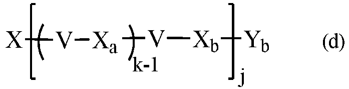 provided that:
R₁, R₂, R₃ are the same and selected from either group (c) or (d) or
one of R₁, R₂, R₃ is H, the two others being the same and selected from either group (c) or (d);
X is Xₐ when j is 1 and X_{b} when j is 0;
Xₐ is at each occurrence independently selected from -OC(=O)CH₂-NH-, -OC(=O)CH₂-O-CH₂-, -O(CH₂)ᵣC(=O)-NH-, -O(CH₂)ᵣC(=O)-O-CH₂, OC(=O)NH-, -C(=O)-, -NH-, and - OCH₂-;
Ya is independently selected from: 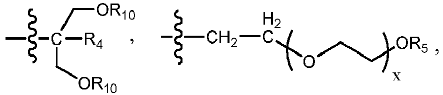
X_{b} is 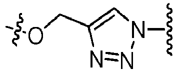
Y_{b} is independently selected from: 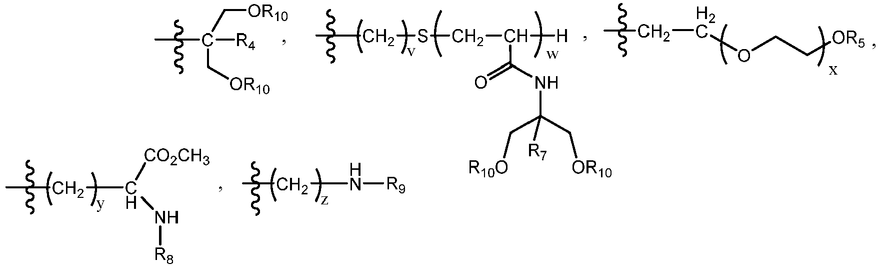
V is 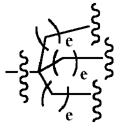
R₄, R₇ are each independently selected from H, C₁-C₆ alkyl and CH₂OR₁₀;
R₅ is selected from H and C₁-C₆ alkyl;
R₆ is a mono-, oligo-, polysaccharide or a cyclodextrine residue;
R₈, R₉ are each independently a peptide residue;
R₁₀ is H or a monosaccharide selected from glucose, galactose, mannose;
i is 0 or 1 ;
j is 0 or 1;
e is 0, 1, 2, 3 or 4;
k is an integer from 1 to 12, preferably 1, 2, 3, 4, or 5;
r is an integer from 1 to 10;
u is 0, 1, 2, 3 or 4;
v is 1, 2, or 3;
w is an integer from 1 to 20, preferably from 1 to 10;
x is an integer from 1 to 30, preferably from 5 to 15;
y, z are each independently an integer from 1 to 6.

2. The process according to claim 1, wherein:
- said second aqueous solution comprises more than 50 % of the at least one metal chosen from the platinum group metals and gold in the form of a salt or of a complex comprised in the first organic liquid composition; and/or
- said second aqueous solution comprises less than 5 % of the diluent comprised in the first organic liquid composition; and/or
- said second aqueous solution comprises less than 2 % of the extractant comprised in the first organic liquid composition; and/or
- said second aqueous solution comprises more than 80 % of the surfactant comprised in the first aqueous solution.

3. The process according to any of claims 1 to 2, further comprising, after step b), a step **c)** of performing a platinum group metal or gold-catalyzed reaction under micellar conditions by contacting said second aqueous solution with the reactants of said platinum group metal or gold-catalyzed reaction to obtain the product of the platinum group metal or gold-catalyzed reaction under micellar conditions.

4. The process according to claim 1, wherein the first organic liquid composition is obtained by extracting an original aqueous phase comprising at least one metal chosen from the platinum group metals and gold in the form of a salt or of a complex, with said extractant in presence of said diluent.

5. The process according to any of claims 1 to 4, wherein said at least one metal chosen from the platinum group metals and gold in the form of a salt or of a complex originates from an aqueous phase comprising nitric acid.

6. The process according to any of claims 1 to 5, wherein the surfactant is selected from: 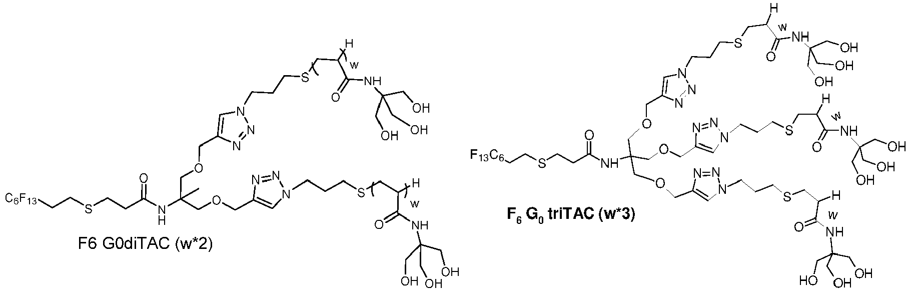 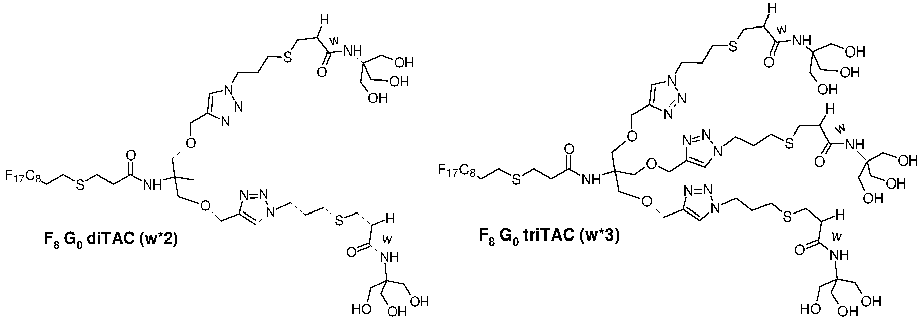 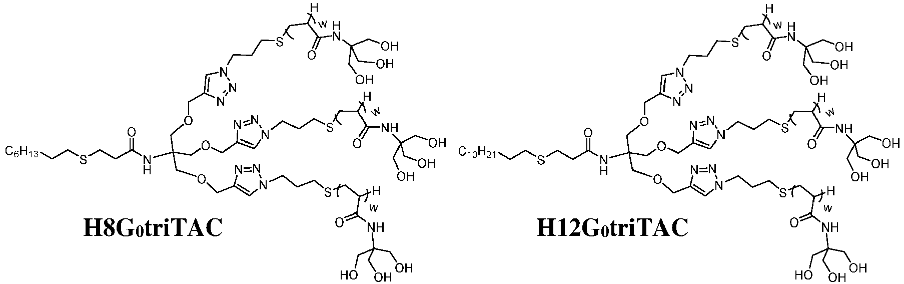 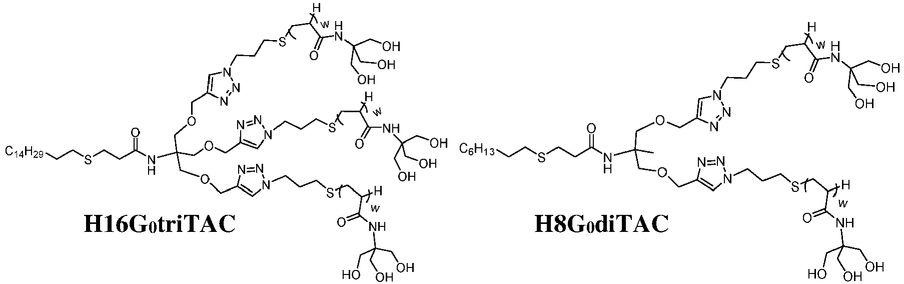 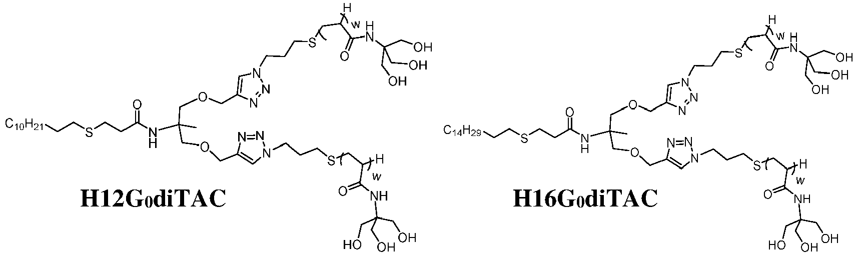 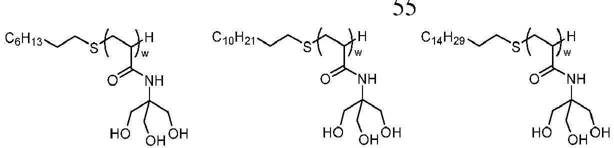 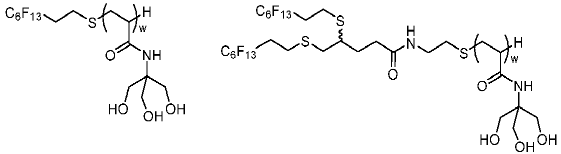 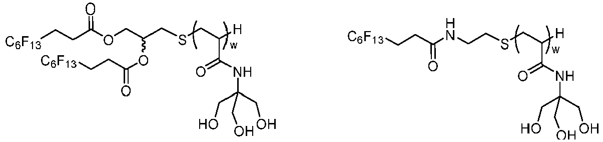 wherein w is as defined in claim 1.

7. The process according to any of claims 1 to 5, wherein the at least one metal chosen from the platinum group metals and gold is palladium.

8. A use of a surfactant as defined in claim 1 for extracting at least one metal chosen from the platinum group metals and gold in the form of a salt or of a complex from a liquid composition to an aqueous micellar solution, said liquid composition resulting from the liquid/liquid extraction of an original acidic aqueous phase comprising at least one metal chosen from the platinum group metals and gold in the form of a salt, with an organic solvent and comprising:
- at least one metal chosen from the platinum group metals and gold in the form of a salt or of a complex,
- an organic solvent, said organic solvent being water immiscible, and comprising or consisting of an extractant of the at least one metal chosen from the platinum group metals and gold in the form of a salt or of a complex from an acidic aqueous solution and optionally, an organic diluent and/or a phase modifier, said extractant being chosen from the group comprising malonamides, alkyl sulfides, sulfoxides, hydroxyoximes, amines, ammonium salts, alkyl phosphine oxides, phosphine sulfides, ketones, thio and dithio-diglycolamides.

9. A micelle comprising at least one metal chosen from the platinum group metals and gold in the form of a salt or of a complex and a surfactant as defined in claim 1.

10. An aqueous micellar solution comprising at least one metal chosen from the platinum group metals and gold in the form of a salt or of a complex and a surfactant as defined in claim 1.

11. An use of a micelle according to claim 9 or an aqueous micellar solution according to claim 10 to perform a platinum group metal or gold-catalyzed reaction under micellar conditions.

## Patentansprüche

1. Verfahren zur Extraktion mindestens eines Metalls, das aus den Platingruppenmetallen und Gold ausgewählt ist, aus einer ersten organischen flüssigen Zusammensetzung, die aus der Flüssig-Flüssig-Extraktion einer ursprünglichen sauren wässrigen Phase resultiert, die mindestens ein Metall umfasst, das aus den Platingruppenmetallen und Gold in Form eines Salzes oder eines Komplexes ausgewählt ist, mit einem organischen Lösungsmittel, und umfassend:
- das mindestens eine Metall, ausgewählt aus den Platingruppenmetalle und Gold in Form eines Salzes oder eines Komplexes, und
- das organische Lösungsmittel, das mit Wasser unvermischbar ist und das mindestens ein Metall löst, das aus den Platingruppenmetallen und Gold in Form eines Salzes oder eines Komplexes ausgewählt ist, wobei das organische Lösungsmittel ein Extraktionsmittel des mindestens einen Metalls, das aus den Platingruppenmetallen und Gold in Form eines Salzes oder eines Komplexes ausgewählt ist, aus der ursprünglichen sauren wässrigen Phase und optional ein organisches Verdünnungsmittel und/oder einen Phasenmodifikator umfasst oder daraus besteht, wobei das Extraktionsmittel aus der Gruppe ausgewählt ist, die Malonamide, Alkylsulfide, Sulfoxide, Hydroxyoxime, Amine, Ammoniumsalze, Alkylphosphinoxide, Phosphinsulfide, Ketone, Thio- und Dithiodiglykolamide umfasst,
wobei das Verfahren die folgenden Schritte umfasst:
**a)** Inkontaktbringen, in einer Flüssig-Flüssig-Extraktion, der ersten organischen flüssigen Zusammensetzung mit einer ersten wässrigen Lösung, die ein Tensid umfasst, um nach der Phasentrennung zu erhalten
- eine zweite wässrige Lösung, die der wässrigen Phase entspricht, die gebildet wird, wenn die wässrige und die organische Phase, die nach der Flüssig-Flüssig-Extraktion erhalten werden, getrennt werden, die eine wässrige mizellare Lösung ist, die das mindestens eine Metall, das aus den Platingruppenmetallen und Gold, in Form eines Salzes oder eines Komplexes ausgewählt ist, und das Tensid umfasst, und
- eine zweite organische flüssige Zusammensetzung, die der organischen Phase entspricht, die gebildet wird, wenn die wässrige und die organische Phase, die nach der Flüssig-Flüssig-Extraktion erhalten werden, getrennt werden, und die das organische Lösungsmittel umfasst;
**b)** Gewinnung, aus der zweiten wässrigen Lösung,
des Tensids umfassend:
- einen hydrophoben zentralen Kern mit einer Wertigkeit m gleich 1, 2 oder 3;
- wenn m=1, eine hydrophile Gruppe G der folgenden Formel, die an den zentralen Kern gebunden ist: 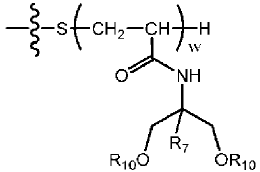 wobei:
R₇ ausgewählt ist aus H, C₁-C₆-Alkyl und CH₂OR₁₀;
R₁₀ H oder ein Monosaccharid ist, ausgewählt aus Glucose, Galactose, Mannose;
w eine ganze Zahl von 1 bis 30, bevorzugt von 4 bis 25, ist;
der zentrale Kern eine -L'-W'-Gruppe ist, wobei:
W' R_{F} oder eine aus W'₁, W'₂ oder W'₃ ausgewählte Gruppe ist: 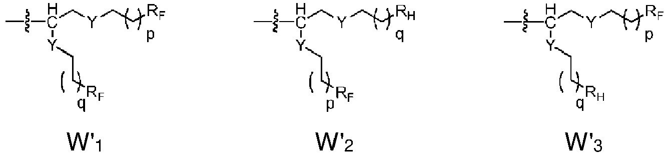
R_{F} eine C₄-C₁₀-Perfluoralkyl- oder eine C₁-C₂₄-Alkylgruppe ist,
R_{H} eine C₁-C₂₄-Alkylgruppe ist,
p 0, 1, 2, 3 oder 4 ist;
q 0, 1, 2, 3 oder 4 ist;
L' eine lineare oder verzweigte C₁-C₁₂-Alkylengruppe ist, optional unterbrochen durch eine oder mehrere Gruppen Y';
Y' bei jedem Auftreten ausgewählt ist aus -OC(=O)-, -C(=O)O-, -O-C(=O)-NH-, -NH-C(=O)-O-, -OC(=O)-O-, -NHC(=O)-, -C(=O)-NH, -NHC(=O)NH-, -NHC(=O)O-, -O-C(=O)-NH-, -NH-, -O- oder -S-;
Y bei jedem Auftreten ausgewählt ist aus -S-, -OC(=O)-, -C(=O)O-, -O-C(=O)-NH-, -NH-C(=O)-O-, -OC(=O)-O-, -NHC(=O)-, -C(=O)-NH, -NHC(=O)NH-, -NHC(=O)O-, -O-C(=O)-NH-, -NH- oder -O-;
- wenn m=2 oder 3, das Tensid dann ein Dendrimer ist, das eine hydrophile Endgruppe am Ende jeder Generationskette aufweist, wobei die hydrophile Endgruppe umfasst:
▪ einen Mono-, Oligo- oder Polysaccharid-Rest,
▪ einen Cyclodextrin-Rest,
▪ einen Polyethylenglykol- (PEG-)Rest,
▪ einen Peptidrest,
▪ ein Tris(hydroxymethyl)aminoethan (Tris) oder
▪ ein 2-Amino-2-methylpropan-1,3-diol;
wobei das Dendrimer die folgende Formel hat: 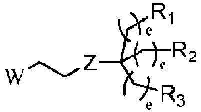 wobei:
W R_{F} oder eine Gruppe ist, die ausgewählt ist aus: 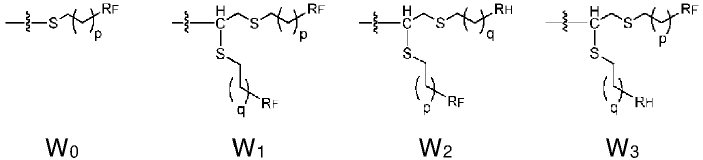
R_{F} eine C₄-C₁₀-Perfluoralkyl- oder eine C₁-C₂₄-Alkylgruppe ist und R_{H} eine C₁-C₂₄-Alkylgruppe ist,
p 0, 1, 2, 3 oder 4 ist;
q 0, 1, 2, 3 oder 4 ist;
Z (CO)NH oder NH(CO) ist;
R₁, R₂, R₃ H oder eine aus (c) oder (d) ausgewählte Gruppe sind: 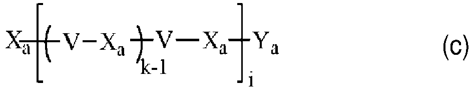 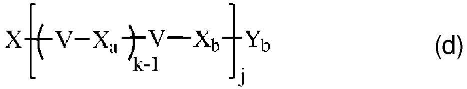 vorausgesetzt, dass:
R₁, R₂, R₃ gleich sind und entweder aus der Gruppe (c) oder (d) ausgewählt sind oder
eines von R₁, R₂, R₃ H ist, wobei die beiden anderen gleich sind und entweder aus der Gruppe (c) oder (d) ausgewählt sind;
X Xₐ ist, wenn j 1 ist und X_{b}, wenn j 0 ist;
Xₐ bei jedem Auftreten unabhängig ausgewählt ist aus -OC(=O)CH₂-NH-, -OC(=O)CH₂-O-CH₂-, -O(CH₂)ᵣC(=O)-NH-, -O(CH₂)ᵣC(=O)-O-CH₂, OC(=O)NH-, -C(=O)-, -NH- und -OCH₂-;
Ya unabhängig ausgewählt ist aus: 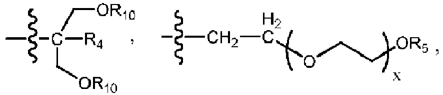
X_{b} 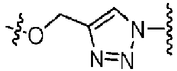 ist
Y_{b} unabhängig ausgewählt ist aus: 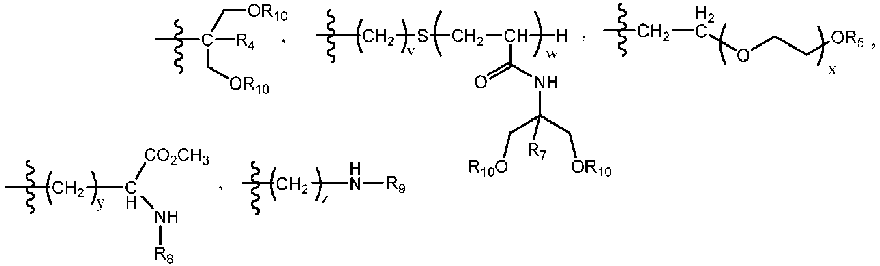
V 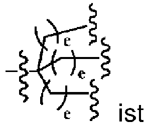
R₄, R₇ jeweils unabhängig voneinander ausgewählt sind aus H, C₁-C₆-Alkyl und CH₂OR₁₀;
R₅ ausgewählt ist aus H und C₁-C₆-Alkyl,
R₆ ein Mono-, Oligo-, Polysaccharid oder ein Cyclodextrin-Rest ist;
R₈, R₉ jeweils unabhängig voneinander ein Peptidrest sind;
R₁₀ H oder ein Monosaccharid ist, ausgewählt aus Glucose, Galactose, Mannose;
i 0 oder 1 ist;
j 0 oder 1;
e 0, 1, 2, 3 oder 4 ist;
k eine ganze Zahl von 1 bis 12, bevorzugt 1, 2, 3, 4 oder 5 ist;
r eine ganze Zahl von 1 bis 10 ist;
u 0, 1, 2, 3 oder 4 ist;
v 1, 2 oder 3 ist;
w eine ganze Zahl von 1 bis 20, bevorzugt von 1 bis 10, ist;
x eine ganze Zahl von 1 bis 30, bevorzugt von 5 bis 15, ist;
y, z jeweils unabhängig voneinander eine ganze Zahl von 1 bis 6 sind.

2. Verfahren nach Anspruch 1, wobei:
- die zweite wässrige Lösung mehr als 50% des mindestens einen Metalls umfasst, ausgewählt aus den Platingruppenmetallen und Gold in Form eines Salzes oder eines Komplexes, das in der ersten organischen flüssigen Zusammensetzung umfasst ist; und/oder
- die zweite wässrige Lösung weniger als 5% des in der ersten organischen flüssigen Zusammensetzung umfassten Verdünnungsmittels umfasst; und/oder
- die zweite wässrige Lösung weniger als 2% des in der ersten organischen flüssigen Zusammensetzung umfassten Extraktionsmittels umfasst; und/oder
- die zweite wässrige Lösung mehr als 80% des in der ersten wässrigen Lösung umfassten Tensids umfasst.

3. Verfahren nach einem der Ansprüche 1 bis 2, weiter umfassend nach Schritt **b),** einen Schritt **c)** der Durchführung einer Platingruppenmetall- oder Gold-katalysierten Reaktion unter mizellaren Bedingungen durch Inkontaktbringen der zweiten wässrigen Lösung mit den Reaktanten der Platingruppenmetall- oder Gold-katalysierten Reaktion, um das Produkt der Platingruppenmetall- oder Gold-katalysierten Reaktion unter mizellaren Bedingungen zu erhalten.

4. Verfahren nach Anspruch 1, wobei die erste organische flüssige Zusammensetzung durch Extraktion einer ursprünglichen wässrigen Phase, die mindestens ein Metall, ausgewählt aus den Platingruppenmetallen und Gold in Form eines Salzes oder eines Komplexes, umfasst, mit dem Extraktionsmittel in Gegenwart des Verdünnungsmittels erhalten wird.

5. Verfahren nach einem der Ansprüche 1 bis 4, wobei das mindestens eine Metall, ausgewählt aus den Platingruppenmetallen und Gold in Form eines Salzes oder eines Komplexes, aus einer wässrigen Phase stammt, die Salpetersäure umfasst.

6. Verfahren nach einem der Ansprüche 1 bis 5, wobei das Tensid ausgewählt ist aus: 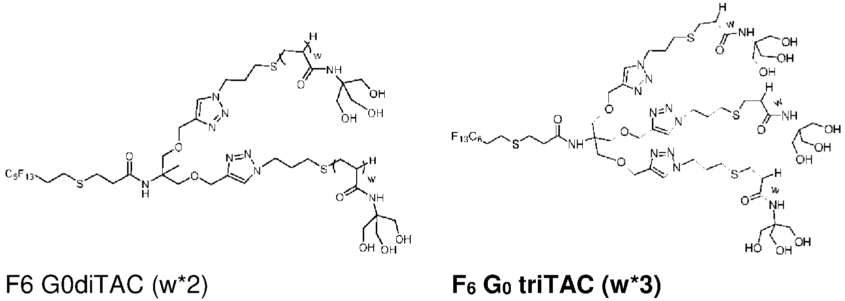 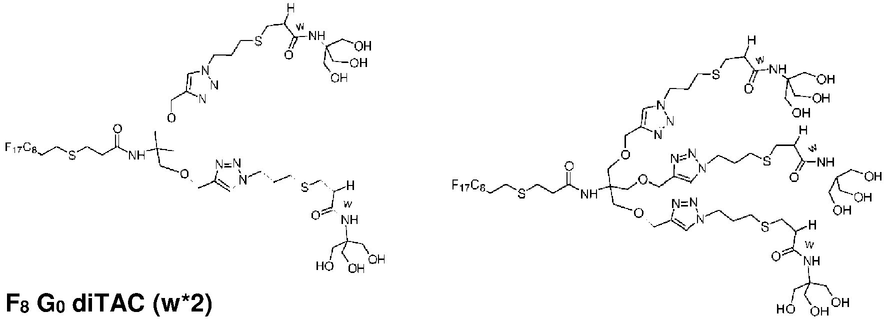 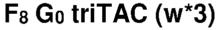 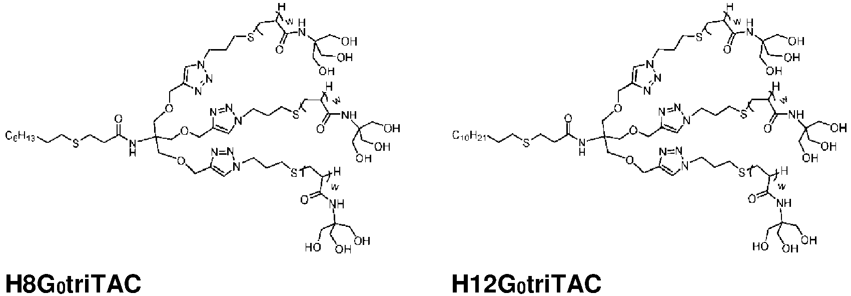 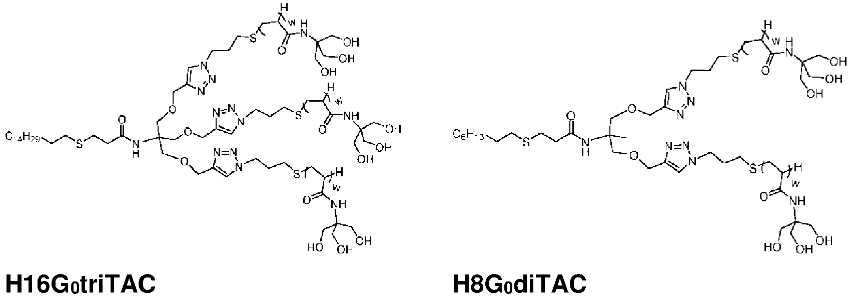 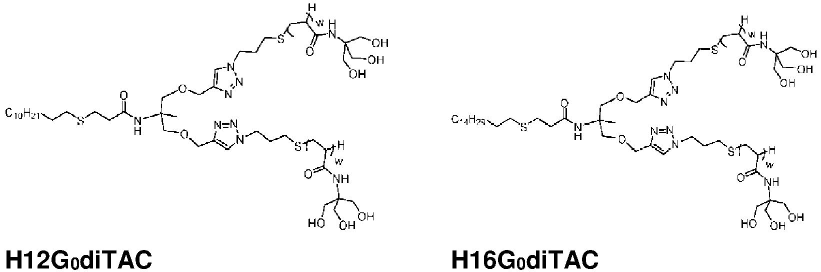 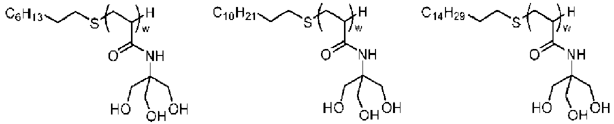 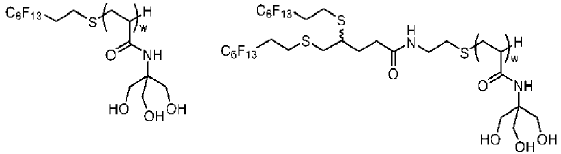 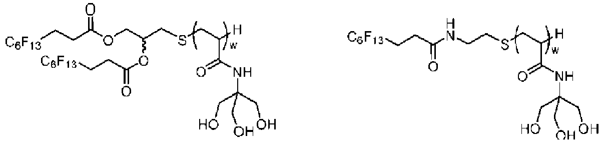 wobei w wie in Anspruch 1 definiert ist.

7. Verfahren nach einem der Ansprüche 1 bis 5, wobei das mindestens eine Metall, ausgewählt aus den Platingruppenmetallen und Gold, Palladium ist.

8. Verwendung eines Tensids nach Anspruch 1 zur Extraktion mindestens eines Metalls, das aus den Platingruppenmetallen und Gold in Form eines Salzes oder eines Komplexes ausgewählt ist, aus einer flüssigen Zusammensetzung in eine wässrige mizellare Lösung, wobei die flüssige Zusammensetzung aus der Flüssig-Flüssig-Extraktion einer ursprünglichen sauren wässrigen Phase, die mindestens ein Metall, das aus den Platingruppenmetallen und Gold in Form eines Salzes ausgewählt ist, umfasst, mit einem organischen Lösungsmittel resultiert und Folgendes umfasst:
- mindestens ein Metall, ausgewählt aus den Platingruppenmetallen und Gold in Form eines Salzes oder eines Komplexes,
- ein organisches Lösungsmittel, wobei das organische Lösungsmittel mit Wasser unvermischbar ist und ein Extraktionsmittel des mindestens einen Metalls, das aus den Platingruppenmetallen und Gold in Form eines Salzes oder eines Komplexes ausgewählt ist, aus einer sauren wässrigen Lösung und optional ein organisches Verdünnungsmittel und/oder einen Phasenmodifikator umfasst oder daraus besteht, wobei das Extraktionsmittel aus der Gruppe ausgewählt ist, die Malonamide, Alkylsulfide, Sulfoxide, Hydroxyoxime, Amine, Ammoniumsalze, Alkylphosphinoxide, Phosphinsulfide, Ketone, Thio- und Dithiodiglykolamide umfasst.

9. Mizelle, umfassend mindestens ein Metall, ausgewählt aus den Platingruppenmetallen und Gold in Form eines Salzes oder eines Komplexes, und ein Tensid nach Anspruch 1.

10. Wässrige mizellare Lösung, umfassend mindestens ein Metall, ausgewählt aus den Platingruppenmetallen und Gold in Form eines Salzes oder eines Komplexes, und ein Tensid nach Anspruch 1.

11. Verwendung einer Mizelle nach Anspruch 9 oder einer wässrigen mizellaren Lösung nach Anspruch 10 zur Durchführung einer durch ein Platingruppenmetall oder Gold katalysierten Reaktion unter mizellaren Bedingungen.

## Revendications

1. Procédé d'extraction d'au moins un métal choisi parmi les métaux du groupe du platine et l'or à partir d'une première composition liquide organique résultant de l'extraction liquide/liquide d'une phase aqueuse acide d'origine comprenant au moins un métal choisi parmi les métaux du groupe du platine et l'or sous la forme d'un sel ou d'un complexe, avec un solvant organique, et comprenant :
- ledit au moins un métal choisi parmi les métaux du groupe du platine et l'or sous la forme d'un sel ou d'un complexe, et
- ledit solvant organique, qui est non miscible à l'eau et qui dissout le au moins un métal choisi parmi les métaux du groupe du platine et l'or sous la forme d'un sel ou d'un complexe, le solvant organique comprenant ou consistant en un agent d'extraction du au moins un métal choisi parmi les métaux du groupe du platine et l'or sous la forme d'un sel ou d'un complexe à partir de la phase aqueuse acide d'origine et facultativement, un diluant organique et/ou un modificateur de phase, ledit agent d'extraction étant choisi dans le groupe comprenant les malonamides, les sulfures d'alkyle, les sulfoxydes, les hydroxyoximes, les amines, les sels d'ammonium, les oxydes d'alkylphosphine, les sulfures de phosphine, les cétones, les thio et dithio-diglycolamides,
ledit procédé comprenant les étapes suivantes :
a) la mise en contact dans une extraction liquide-liquide de ladite première composition liquide organique avec une première solution aqueuse comprenant un tensioactif pour obtenir après une séparation de phases,
- une seconde solution aqueuse, correspondant à la phase aqueuse formée quand la phase aqueuse et la phase organique obtenues après l'extraction liquide-liquide sont séparées, qui est une solution micellaire aqueuse, comprenant le au moins un métal choisi parmi les métaux du groupe du platine et l'or sous la forme d'un sel ou d'un complexe et le tensioactif, et
- une seconde composition liquide organique, correspondant à la phase organique formée quand la phase aqueuse et la phase organique obtenues après l'extraction liquide-liquide sont séparées, et comprenant le solvant organique ;
b) la récupération de ladite seconde solution aqueuse,
ledit tensioactif comprenant :
- un noyau central hydrophobe de valence m égale à 1, 2 ou 3 ;
- quand m = 1, un groupe hydrophile G de formule suivante, lié au noyau central : 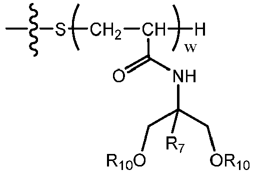 dans laquelle
R₇ est sélectionné parmi H, un alkyle en C₁ à C₆ et CH₂OR₁₀ ;
R₁₀ est H ou un monosaccharide sélectionné parmi le glucose, le galactose, le mannose ;
w est un nombre entier allant de 1 à 30, de préférence de 4 à 25 ;
le noyau central étant un groupe -L'-W', dans lequel :
W' est R_{F} ou un groupe sélectionné parmi W'₁, W'₂ ou W'₃ : 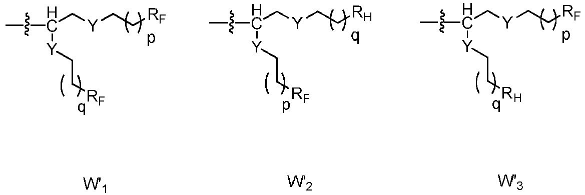
R_{F} est un groupe perfluoroalkyle en C₄ à C₁₀ ou un groupe alkyle en C₁ à C₂₄,
R_{H} est un groupe alkyle en C₁ à C₂₄,
p est 0, 1, 2, 3 ou 4 ;
q est 0, 1, 2, 3 ou 4 ;
L' est un groupe alkylène en C₁ à C₁₂ linéaire ou ramifié, facultativement interrompu par un ou plusieurs groupes Y' ;
Y' à chaque occurrence est choisi parmi -OC(=O)-, -C(=O)O-, -OC(=O)-NH-, -NH-C(=O)-O-, -OC(=O)-O-, -NHC(=O)-, -C(=O)-NH, -NHC(=O)NH-, -NHC(=O)O-, -O-C(=O)-NH-, -NH-, -O- ou -S- ;
Y à chaque occurrence est choisi parmi -S-, -OC(=O)-, -C(=O)O-, - O-C(=O)-NH-, -NH-C(=O)-O-, -OC(=O)-O-, -NHC(=O)-, -C(=O)-NH, - NHC(=O)NH-, -NHC(=O)O-, -O-C(=O)-NH-, -NH- ou -O- ;
- quand m = 2 ou 3, le tensioactif étant alors un dendrimère présentant un groupe terminal hydrophile à l'extrémité de chaque chaîne de génération, le groupe terminal hydrophile comprenant :
▪ un résidu mono-, oligo- ou polysaccharidique,
▪ un résidu cyclodextrine,
▪ un résidu polyéthylène glycol (PEG),
▪ un résidu peptidique,
▪ un tris(hydroxyméthyl)aminoéthane (Tris), ou
▪ un 2-amino-2-méthylpropane-1,3-diol ;
ledit dendrimère étant de formule suivante : 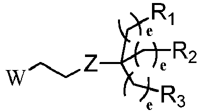 dans laquelle :
W est R_{F} ou un groupe sélectionné parmi : 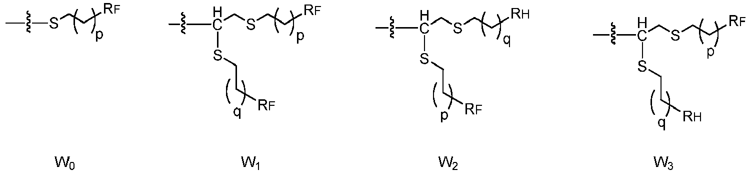
R_{F} étant un perfluoroalkyle en C₄ à C₁₀ ou un groupe alkyle en C₁ à C₂₄ et R_{H} étant un groupe alkyle en C₁ à C₂₄,
p est 0, 1, 2, 3 ou 4 ;
q est 0, 1, 2, 3 ou 4 ;
Z est (CO)NH ou NH(CO),
R₁, R₂, R₃ sont H, ou un groupe sélectionné parmi (c) ou (d) : 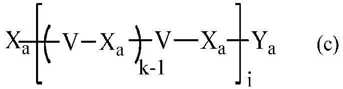 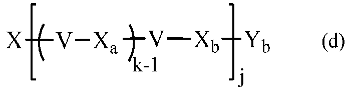 à condition que :
R₁, R₂, R₃ soient identiques et sélectionnés dans le group (c) ou (d) ou
un parmi R₁, R₂, R₃ est H, les deux autres étant identiques et sélectionnés dans le groupe (c) ou (d) ;
X est Xₐ quand j est 1 et X_{b} quand j est 0 ;
Xₐ est à chaque occurrence sélectionné indépendamment parmi - OC(=O)CH₂-NH-, -OC(=O)CH₂-O-CH₂-, -O(CH₂)ᵣC(=O)-NH-, -O(CH₂)ᵣC(=O)-O-CH₂, OC(=O)NH-, -C(=O)-, -NH-, et -OCH₂- ;
Yₐ est sélectionné indépendamment parmi : 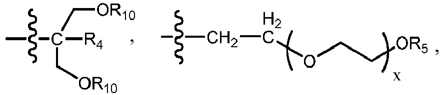
X_{b} est 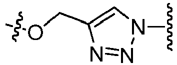
Y_{b} est sélectionné indépendamment parmi : 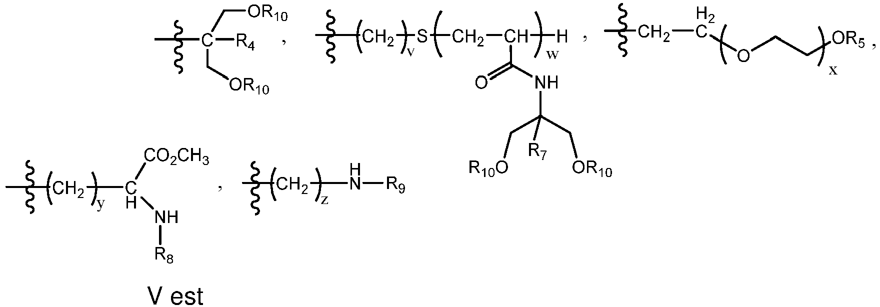 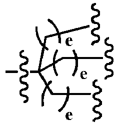
R₄, R₇ sont sélectionnés chacun indépendamment parmi H, un alkyle en C₁ à C₆ et CH₂OR₁₀ ;
R₅ est sélectionné parmi H et un alkyle en C₁ à C₆ ;
R₆ est un mono-, oligo-, polysaccharide ou un résidu cyclodextrine ;
R₈, R₉ sont chacun indépendamment un résidu peptidique ;
R₁₀ est H ou un monosaccharide sélectionné parmi le glucose, le galactose, le mannose ;
i est 0 ou 1 ;
j est 0 ou 1 ;
e est 0, 1, 2, 3 ou 4 ;
k est un nombre entier allant de 1 à 12, de préférence 1, 2, 3, 4, ou 5 ;
r est un nombre entier allant de 1 à 10 ;
u est 0, 1, 2, 3 ou 4 ;
v est 1, 2, ou 3 ;
w est un nombre entier allant de 1 à 20, de préférence de 1 à 10 ;
x est un nombre entier allant de 1 à 30, de préférence de 5 à 15 ;
y, z sont chacun indépendamment un nombre entier allant de 1 à 6.

2. Procédé selon la revendication 1, dans lequel
- ladite seconde solution aqueuse comprend plus de 50 % du au moins un métal choisi parmi les métaux du groupe du platine et l'or sous la forme d'un sel ou d'un complexe compris dans la première composition liquide organique ; et/ou
- ladite seconde solution aqueuse comprend moins de 5 % du diluant compris dans la première composition liquide organique ; et/ou
- ladite seconde solution aqueuse comprend moins de 2 % de l'agent d'extraction compris dans la première composition liquide organique ; et/ou
- ladite seconde solution aqueuse comprend plus de 80 % du tensioactif compris dans la première solution aqueuse.

3. Procédé selon l'une quelconque des revendications 1 à 2, comprenant en outre, après l'étape b), une étape c) consistant à effectuer une réaction catalysée par un métal du groupe du platine ou par de l'or dans des conditions micellaires en mettant en contact ladite seconde solution aqueuse avec les réactifs de ladite réaction catalysée par un métal du groupe du platine ou par de l'or pour obtenir le produit de la réaction catalysée par un métal du groupe du platine ou par de l'or dans des conditions micellaires.

4. Procédé selon la revendication 1, dans lequel la première composition liquide organique est obtenue par l'extraction d'une phase aqueuse d'origine comprenant au moins un métal choisi parmi les métaux du groupe du platine et l'or sous la forme d'un sel ou d'un complexe, avec ledit agent d'extraction en présence dudit diluant.

5. Procédé selon l'une quelconque des revendications 1 à 4, dans lequel ledit au moins un métal choisi parmi les métaux du groupe du platine et l'or sous la forme d'un sel ou d'un complexe provient d'une phase aqueuse comprenant de l'acide nitrique.

6. Procédé selon l'une quelconque des revendications 1 à 5, dans lequel le tensioactif est sélectionné parmi : 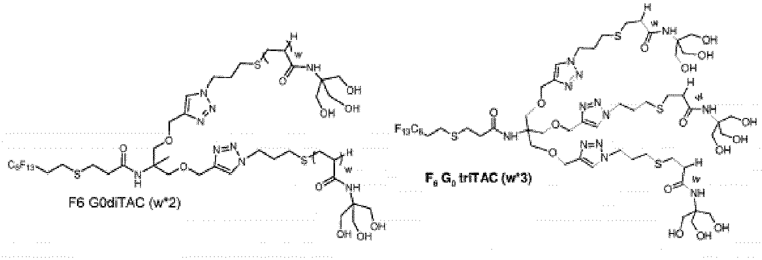 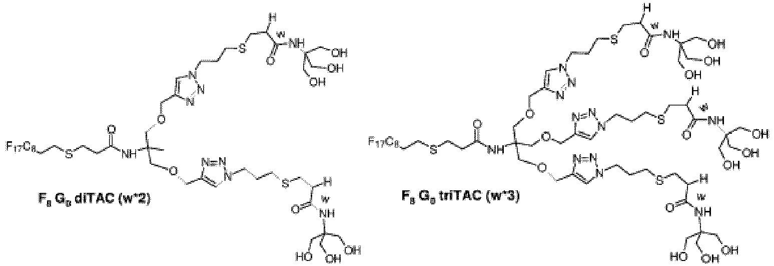 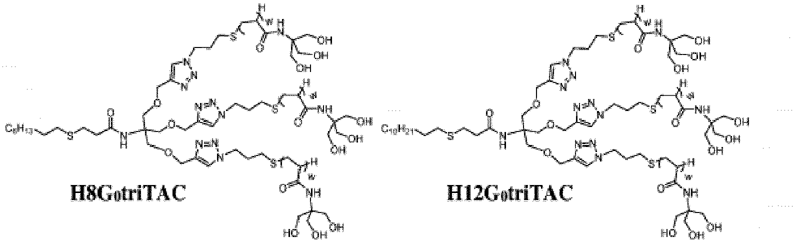 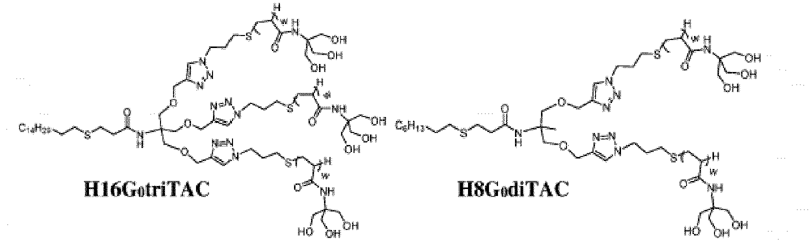 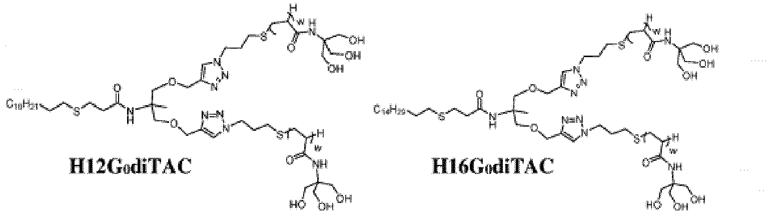 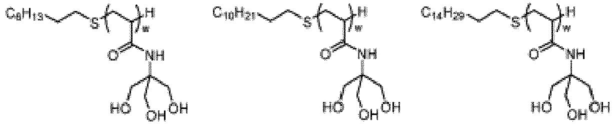 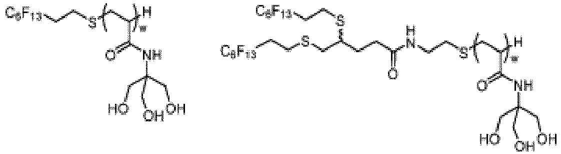 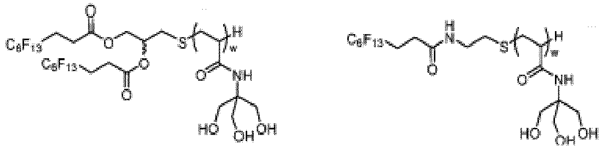 dans lequel w est tel que défini dans la revendication 1.

7. Procédé selon l'une quelconque des revendications 1 à 5, dans lequel le au moins un métal choisi parmi les métaux du groupe du platine et l'or est le palladium.

8. Utilisation d'un tensioactif tel que défini dans la revendication 1 pour extraire au moins un métal choisi parmi les métaux du groupe du platine et l'or sous la forme d'un sel ou d'un complexe à partir d'une composition liquide vers une solution micellaire aqueuse, ladite composition liquide résultant de l'extraction liquide/liquide d'une phase aqueuse acide d'origine comprenant au moins un métal choisi parmi les métaux du groupe du platine et l'or sous la forme d'un sel, avec un solvant organique et comprenant :
- au moins un métal choisi parmi les métaux du groupe du platine et l'or sous la forme d'un sel ou d'un complexe,
- un solvant organique, ledit solvant organique étant non miscible à l'eau, et comprenant ou consistant en un agent d'extraction du au moins un métal choisi parmi les métaux du groupe du platine et l'or sous la forme d'un sel ou d'un complexe à partir d'une solution aqueuse acide et facultativement, un diluant organique et/ou un modificateur de phase, ledit agent d'extraction étant choisi dans le groupe comprenant les malonamides, les sulfures d'alkyle, les sulfoxydes, les hydroxyoximes, les amines, les sels d'ammonium, les oxydes d'alkylphosphine, les sulfures de phosphine, les cétones, les thio et dithio-diglycolamides.

9. Micelle comprenant au moins un métal choisi parmi les métaux du groupe du platine et l'or sous la forme d'un sel ou d'un complexe et un tensioactif tel que défini dans la revendication 1.

10. Solution micellaire aqueuse comprenant au moins un métal choisi parmi les métaux du groupe du platine et l'or sous la forme d'un sel ou d'un complexe et un tensioactif tel que défini dans la revendication 1.

11. Utilisation d'une micelle selon la revendication 9 ou d'une solution micellaire aqueuse selon la revendication 10 pour effectuer une réaction catalysée par un métal du groupe du platine ou par de l'or dans des conditions micellaires.
